# EUROPEAN PATENT SPECIFICATION

(11) **EP 1 284 394 B1**
(45) Date of publication and mention of the grant of the patent: **11.07.2007**
(21) Application number: 02024565.0
(22) Date of filing: 20.04.1999
(51) Int. Cl.: F24D 10/00, F28F 27/02, G05D 23/00

(54) **Control process for a heat transferring device**
Verfahren zur Regelung einer Wärmetauscher-Einrichtung
Procédé de régulation d'un echangeur de chaleur

(30) Priority: 20.04.1998 SE 9813717; 20.04.1998 SE 9813725
(43) Date of publication of application: 19.02.2003
(62) Divisional of application: 99925525.0
(73) Proprietor: Sundsvall Energi AB, 851 23 Sundsvall (SE)
(72) Inventor: Ullberg, Sören, 860 13 Stöde (SE)
(74) Representative: Loqvist, Gabriel Mathias

(56) References cited:
- EP-A- 0 222 040
- DE-A- 4 316 484
- DE-A- 19 618 415

## Description

### TECHNICAL FIELD

The present invention relates to a rationally produced heat transferring device for generating heat and/or hot water in premises comprising at least one heat exchanger, and a control process for such a heat transferring device. More specifically, the invention relates to a compact heat-transferring device having integrated control and monitoring means, comprising at least one plate heat exchanger, coupling means and connection means, and arranged to produce domestic hot water and/or hot water for a heating system from hot water obtained from an external hot water source.

### STATE OF THE ART

Compact heat exchangers, such as soldered plate heat exchangers, are used both for cooling and heating. Said heat exchangers are then, as a rule, connected to a pipe system, in which a medium flows which is to be heated/cooled, and another pipe system in which a heating/cooling medium flows. Furthermore, there are arranged in the pipe system, i. a. temperature- and flow-transducers, circulation pumps and i.e. flow control valves to control the heating/cooling. Every inlet and outlet of the heat exchanger is connected in a conventional manner by means of pipes and pipe-fittings to the secondary and primary systems. This usually increases the volume of the device and constitute a large volume in relation to the size of the plate heat exchanger. A heat exchanger for simultaneously heating two mediums according to known technology is usually arranged with connections on two opposite sides, whereby this relative increase of volume becomes even more defined. If the heating of any of the two mediums shall also take place in two separate steps, distribution must again take place in at least two separate pipe-connected heat exchangers.

Stations that connect premises to district heating systems usually contain two heat exchangers, either coupled in parallel, or in so called two-stage, for simultaneous production of domestic hot water and hot water to a water carrying system for heating the premises. The system for heating the premises may comprise radiators, convectors, air-batteries and/or heating ciruits, such as floor circuits. There is a pronounced need for cost-effectively produced, small, compact, service-friendly units in the form of functional integrated modules arranged in capacity stages having few couplings and thus small risk of leakage, and which need very little supervision and maintenance. It is also advantageous if they can be quickly and rationally installed and replaced especially in smaller premises, where it would be advantageous to be able to remove the complete units.

Normally the capacity requirements vary a great deal for larger district heating stations. For this reason they are often exactly dimensioned, both with regard to the heat exchanger and the control valves which are a part, were consideration also is taken to where they are placed in the circuit and to the prevailing differential pressure. For smaller plants, and especially then for smaller buildings such as detached houses, there is no scope for such exact dimensioning, here one is more in need of large standardised series having, for example, different capacity stages, the same equipment from station to station. If these smaller plants are to work well and produce a good standard of comfort, despite that among themselves there are great differences in differential pressure requirements, equipment is required which can constantly keep the differential pressure at a certain determined level. This is described in "Svenska Fjärrvärme Föreningens Råd and directives, FVF 1997:13, (Swedish District Heating Association Recommendations and directions) page 9, 14 and 15, Comments page 6 and 18 and the document "Din Fjärrvärme Central" (Your District Heating Station) page 4. Thus, it should be advantageous if such a smaller district heating station in itself already on delivery from the factory contained a simple but robust and rationally produced differential pressure regulator. The known differential pressure regulators are too large and technically complicated and relatively expensive to be of use in the above described stations, thus there is a need for a simple, robust and cheap differential pressure regulator adapted for this purpose for use in central heating for smaller buildings.

Components which are included in the above mentioned devices always comprise a domestic hot water regulator, among other things. It can even be mentioned that at least for smaller premises, the capacity requirements to supply domestic hot water are the same for most of the houses. This situation creates both a need and an opening for a standardised, simple, robust easily produced and thus cheap hot water regulator to control the heat exchanger, and in certain applications, also a circulation pump for preparing domestic hot water. The equipment commercially available is often complicated, unnecessarily large and expensive and lacks any substantial function and must therefor be supplemented with additional supporting equipment. When using small soldered plate heat exchangers, experience in the trade has shown that, partly due to the very rapid heat exchanger containing just a few decilitres of water, and partly due to its simplicity and reliability, a rapid hot water regulator of the so called self-action type is preferred. Due to known problems with the time constant for temperature sensors etc. it would be an advantage if the hot water regulator for its main control was not primarily controlled by outgoing hot water temperature. Since the heat exchange process is mainly predictable, it would be an advantage if the regulator instead were controlled by the cold water flow.

Known conventional equipment for regulating, for instance, domestic hot water production in a heat exchanger carrying out temperature readings of the heated medium, bases its functionality on that there is always either a deficiency or a surplus in the parameter to be regulated and that the regulator attempts, as far as possible, to compensate the deficiency or the surplus. This procedure is generally repeated every time the equipment is exposed to a disturbance, for instance, in a flow change in the domestic hot water branch pipe. Due to the time constant in the temperature sensor and running times for the regulating motors there is always a larger or smaller deviation between the actual values and the desired values, which, furthermore, often leads to larger or smaller temperature swings.
Such known conventional equipment for regulating, for instance, domestic hot water production in a heat exchanger is disclosed in DE 19618415. In the feedback control process according to DE 19618415 an integrated heat exchanger device allows heat energy to be transferred from a steam or water primary circuit to a secondary circuit via a heat exchanger. The heat exchanger has separate measuring chambers for the entry and exit flow on both the primary and secondary side, wherein each chamber contains temperature and/or pressure sensors coupled to a control and regulating unit for the operation of the heat exchange device. In particular, the flow in the primary circuit of the heat exchanger is controlled on basis of the discrepancy of the temperature of the outgoing fluid from the secondary side of the heat exchanger from the desired temperature.

It is therefore desirable to have a self-acting domestic hot water flow rate regulator in a device as stated above that allows for a continuous proportionally correct flow ratio between the domestic hot water which is to be heated and the hot water which is supplied to the heat exchanging process as heating medium, based on detected domestic hot water requirements. It is also desirable that the regulator can keep the heat exchanger hot during non-output time. Such a regulator or control valve shall even cope with the extremely difficult regulating cases caused when consumers draw off relatively small amounts of hot water, where one normally does not have a circulation circuit for domestic hot water. The regulator shall also be suitable for use in the characteristic and acknowledged difficult to handle "on-off" regulating, which is typical for small plants.

In a district heating unit according to the above, there is also a need for a robust, easily managed and reliable flow transducer. Known flow transducers are usually of the following types; mechanical, comprising impellers or the like, or float dips in upward going channels, restrictors, such as venturi pipes or orifice plates, fluidistors; magnet inductive sensors; acoustic sensors; turbulent flow transducers or thermal sensors such as running-time sensors or conductive sensors, among others. To measure water and/or the energy consumption in smaller heating stations, primarily cheap mechanical flow transducers are still used, comprising impellers. These various types of flow transducers are mainly for installation in pipes or the like. A common limitation in these known flow transducers is that they are difficult to arrange so that with constant exactness recognise both low and high flow in a channel having varying flows. This is due to the fact that such a known flow transducer usually works with precision only in a limited area of the flow area for which it is designed, which is usually the flow over a certain minimum starting value, i.e. the flow must reach a minimum value before said flow transducer starts to indicate. Said initial value is often relatively high and these flow transducers are often not very accurate just slightly over this starting value, i.e. at the lower measuring level. Cf. among other things the measuring law's inaccurate curves in Boverkets (Centrally Authorised In-process Inspection Authority) statutes SFS 1994:26. Thus, a flow transducer according to known technology is usually dimensioned so that the expected flow always lies over the initial value and the flow under the initial value normally does not need to be determined. A further disadvantage with these known meters is that in order to measure in the lower area they must be heavily throttled. This results in undesirable large pressure drops already at moderate flow, which accentuates at greater flow. The mechanical meters with impellers, are also sensitive to wear and do not stand up to overload. For this reason they are often over-dimensioned, for the sake of durability, in relation to the requirement of the plant. Particularly in technology for heating stations it is important that the transducer can react and indicate a clear and well-defined difference between no flow and minimum flow, i.e. a distinct starting flow. Furthermore, this flow should not fluctuate to zero due to the characteristic swing, which usually occurs in large hydraulic systems, such as a district heating system, since it would then be difficult by means of periodical intermittent "checks" of the instantaneous flow to register the correct flow at the lowest measuring level.

Thus, there is a need for a flow transducer integrated in a device as stated above which has a low, and preferably constant pressure fall over the measuring area and has a low and distinct initial flow and which does not deteriorate and withstands overload, which with sufficient accuracy can be used to determined both low and high flows and which shows the same accuracy over the entire area of expected flow.

### THE INVENTION

The object of the invention is to develop the above mentioned type of compact heat exchanger device, and especially comprising soldered plate heat exchanger, for heating and hot water preparation for premises, so as to integrate them as far as possible with a functional and flexibly formed connection block by rational and cost favourable production and to develop and adapt suitable components and adapt conventional components for controlling and monitoring the thermal process.

According to an aspect of the invention, an object of the invention is to disclose a compact heat transferring device, which in addition to not taking up much space and being flexible, has many integrated functions and components for connecting the heating and heated mediums, as well as controlling and monitoring the thermal process in the heat exchanger.
According to an aspect of the present invention there is provided a method for controlling a heat exchanging process in a heat transferring device comprising a primary fluid circuit and a secondary fluid circuit. The method comprises the steps of: sensing a first temperature of the incoming fluid in the primary fluid circuit; sensing a second temperature of the incoming fluid in the secondary fluid circuit; sensing a fluid flow in the secondary fluid circuit; transferring a first control signal representing the first sensed temperature, a second control signal representing the sensed fluid flow, and a third control signal representing the sensed second temperature to a control unit; and controlling the fluid flow in the primary fluid circuit using the control unit, by utilizing the first control signal, the second control signal, and the third control signal and, without utilizing the temperature of the outgoing fluid from the secondary circuit, so that a proportionally correct flow ratio between the outgoing fluid flow of the secondary fluid circuit and the ingoing fluid flow of the primary fluid circuit is obtained with respect to a temperature requirement of the outgoing fluid.

It is pointed out that in this context and in what is to follow, starting from the aforesaid, that said connection block shows a degree of "intelligence" in that it is formed and equipped to distribute and control the flow in and out of the device starting from a desired thermal process and is not just one simple connection device or type of adapter plate intended to facilitate the connections. In the following the connection block according to this definition is termed "intelligent connection block".

According to a further definition of "intelligent connection block", comparison can be made with an electrical equivalent in the form of a so-called IC-circuit or circuit board but intended for an hydraulic circuit, i.e. surface mounting technology with components which extend by differing lengths or levels down into the block.

According to one embodiment the device according to the present invention comprises only one heat exchanger, preferably arranged as a water heater for domestic water to be heated by heat exchanging with hot water from a boiler or the like. The intelligent connection block connected to the plate heat exchanger comprises, thus, flow distribution and flow accumulation means to allow filling of the primary fluid circuit, the boiler water circuit, with cold water taken from a secondary fluid circuit, such as, cold water to the water heater. The intelligent connection block also comprises controlling means for heating water in the water heater, whereby, preferably, the outflow of hot boiler-water from the water heater is controlled from the flow of domestic hot water in the water heater. The intelligent connection block may also contain one or several compensation units for controlling the flow of hot boiler-water, which is described more in detail in the following.

The controlling means may include at least one differential pressure valve, which by variations in the pressure difference between the primary fluid at the inflow into the device and at the outflow from the device stabilises the pressure difference between inlets and outlets. Preferably the differential pressure regulator is arranged to open at a pressure difference below a predetermined value and to close at a pressure difference exceeding a certain value. Preferably the device according to the invention includes a differential pressure regulator arranged in the intelligent connection block, thereby allowing uniquely simple and reliable performance.

The controlling means preferably include at least one domestic hot water regulator or a combination of a domestic hot water regulator and a pump or the like to control the primary fluid's flow through the heat exchanger for the domestic hot water. The domestic hot water regulator, which in the present invention is described as being of two main variations each intended for their own particular main application, is based upon a flow transducer. This is preferably hydraulically associated with a controlled valve, so that based on the reading of the inflow of cold water for production of domestic hot water, when required after compensation, it controls the outflow of the hot water return from the external hot water source out of the heat exchanger. The flow transducer comprises a measuring piston, a hydraulic main cylinder, an axially moveable hydraulic piston in the main cylinder, which by the a substantially weak measuring piston spindle or a measuring piston spindle unloaded against the static pressure existing in the channel pressure is connected to the measuring cylinder. The flow transducer, for certain applications, may also be provided with an electric circuit breaker for controlling a circulation pump. The controlled valve includes a hydraulic slave cylinder, an axially moveable hydraulic piston in the slave cylinder, a valve disk, a valve seat and a valve spindle, which connects the slave cylinder's hydraulic piston with the valve disk.

Other compensating units may be arranged when required to sensor the differential pressure and/or the temperature of the incoming primary water and when required also compensate for variations in these as well as providing a heat maintaining function. According to a preferred embodiment of the hot water regulator, the control valve is arranged with means to correlate registered cold water flow and temperature readings on incoming district heating water to the required temperature of outgoing domestic hot water as well as comprising a built-in function for maintaining heat. Such means obviously include adjustment functions whereby they are adapted to the existing conditions of the heat exchanger and building in question. By means of the above described heat exchanger, the hot water regulator with the flow transducer and compensating elements correlate the flow and temperature variable-readings with the setting of the opening degree of the controlled valve, and a desired temperature for domestic hot water is obtained essentially influenced by the fluid flowing into the heat exchanger. Compensation of scalding-guide type, which based on divergences from the desired temperature, adjusts the opening degree of the valve, is preferably used in cases where such divergences, which can occur because of disruptions or errors in the process, can cause injury.

The basic difference between a control valve according to the invention and temperature controlled traditional control equipment for regulating domestic hot water production in a heat exchanger is that the traditional regulating is based on the fact that there is always, among other things, because of the time constant in the temperature sensor, settings etc., created either a deficiency or a surplus in the parameter which shall be regulated, which the regulator thereafter attempts as far as it is able, to compensate for. This procedure normally is repeated at every disruption in the equipment, for instance, at a flow change in the domestic hot water outlet. Since a control valve according to any of the afore-described embodiments of the invention always provides a proportionally correct flow condition between the heating and the cooling water in the heat exchanging process, it may be assumed that central heating comprising a control valve according to the invention, intended to control the production of domestic hot water, provides essentially improved comfort and the dilemma with luke-warm water is but a memory. The hot water regulator is, furthermore, developed to take care of the extremely difficult regulating cases which occur when users have relatively small domestic hot water requirements and have small, quick heat exchangers, and where one normally has no hot water circulation. The valve also provides good comfort and an essential improvement to the well-known difficult-to-control and characteristic "on-off" regulating, which is typical for small plants. The valve is based on the fact that as soon as a hot water flow takes place then a proportionately correct district heating flow is always released through the water heater. When the flow changes, an appropriate correlation of the district heating flow immediately takes place in order to maintain the correct hot water temperature. When drawing-off stops, the district heating valve closes immediately and avoids, i.a. the lime depositing phenomenon on the valve surfaces which is caused by over tempering, due to the primary valve not closing quickly enough when the secondary flow, and therewith the cooling, stops.

According to a preferred embodiment, the monitoring means include also at least one simple, functionally reliable flow transducer having a limited and low pressure drop and having a distinct start flow and great accuracy over a large effective range. In this area of technology, to monitor the thermal process in a heat exchanger, it is thus important that it covers all expected flows from essentially no flow to the maximum expected flow and by simple means combine with, and be able to function with precision with an energy-meter taking intermittent readings of the flow.

### DRAWINGS

The invention shall be described more in detail in the following and exemplified by preferred embodiments with reference being made to attached drawings.
Figure 1 illustrates a circuit diagram of the principle of a heat transferring device according to an embodiment of the invention, comprising a heat exchanger, preferably a water heater.
Figure 2 illustrates a circuit diagram of the principle of a heat-transferring device according to an alternative embodiment of the invention, comprising a heat exchanger and a shunt circuit.
Figure 3 illustrates a circuit diagram of the principle of a heat-transferring device according to a preferred embodiment comprising a heat exchanger.
Figure 4a illustrates a heat transferring device comprising a coupling means, two end pieces, a number of sheet formed channel plates with recesses which are arranged to be assembled into one intelligent connection block having inner channel systems for connection of the heat transferring device according to one embodiment of the invention, comprising a heat exchanger in the form of a water boiler.
Figure 4b illustrates a heat-transferring device comprising an end fitting, two end pieces, a number of sheet formed channel plates with recesses, which are arranged to be assembled into one intelligent connection block having inner channel systems for connecting the heat-transferring device according to one embodiment of the invention, comprising a heat exchanger and a shunt circuit.
Figure 4c illustrates a heat-transferring device comprising a coupling means, two end pieces, a number of sheet formed channel plates with recesses, which are arranged to be assembled into one intelligent connection block having inner channel systems for connecting the heat-transferring device according to one embodiment of the invention, comprising two heat exchangers.

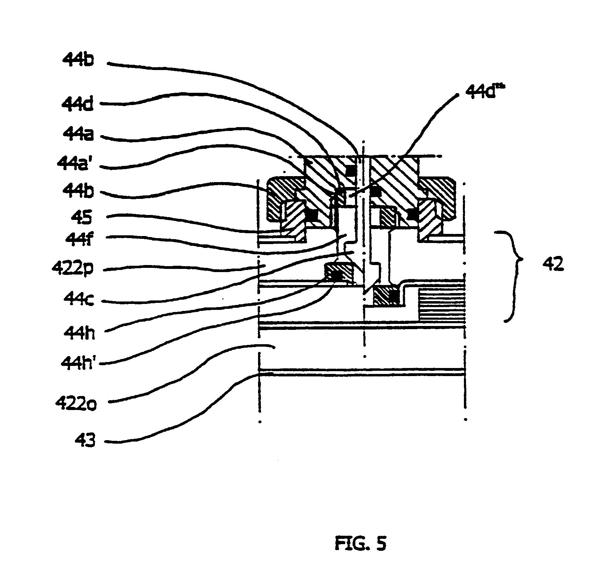

Figure 5 illustrates an adapted application of a control valve for surface mounting on an intelligent connection block according to any embodiment of the invention.
Figure 6 illustrates a differential pressure regulator intended to be integrated in an intelligent connection block for a heat-transferring device according to any embodiment of the invention.
Figure 7a illustrates a flow transducer according to one embodiment of the present invention and suitable to be integrated in the intelligent connection block in combination with a valve according to Figure 8 or 9 being included in a control valve for domestic hot water included in the heat-transferring device according to the present invention.
Figure 7b illustrates in detail the upper part of the flow transducer's main cylinder according to Figure 7a in a variant having a piston with shorter length in axial direction and alternative sealing between the piston and cylinder.
Figure 7c illustrates in detail the upper part of the flow transducer's main cylinder according to Figure 7a in a variant comprising an electric actuator in the upper end position.
Figure 8 illustrates a valve suitable to be integrated in the intelligent connection block to regulate the flow in a channel in a heat-transferring device according to one embodiment of the present invention associated with a flow transducer for controlling the domestic hot water preparation according to any of the variations in Figures 7a-7c.
Figure 9a illustrates a complete compensating unit of scalding guard type, suitable to be integrated in an intelligent connection block and associated with a flow transducer according to Figures 7a-7c and a valve according to Figure 8 or 10, included in a control valve to regulate domestic hot water in a heat-transferring device according to the present invention.
Figure 9b illustrates an alternative compensating unit, of the type which in addition to the scalding guard also provides a basic heat maintaining function for the water heater and thus an indirect maintaining of heat of the incoming primary fluid via a circulation channelling effect, suitable to be associated with a flow transducer according to Figures 7a-7c and a controlled valve according to Figure 8 to be included in a control valve to regulate domestic hot water in a heat-transferring device according to the invention.
Figure 9c illustrates the upper part of a compensating unit according to Figure 9a, in an alternative embodiment, which in addition to scalding guard, provides a heat maintaining function at a temperature level which is the same as for the scalding guard, suitable to be associated with a flow transducer according to Figures 7a-7c and a controlled valve according to Figure 8 to be included in a control valve to regulate domestic hot water in a heat-transferring device according to the invention.
Figure 10 illustrates a controlled valve comprising in part an integral compensating element of the type providing adjustment of the temperature of the incoming primary fluid and via circulation channelling, a direct heat maintaining function for incoming primary fluid, suitable to be associated with a flow transducer according to any of the variations in Figures 7a-7c and optionally scalding guard according to Figure 9a to be included in a system of sensors and actuators to regulate the domestic hot water in a heat-transferring device according to the present invention.
Figure 11a illustrates a flow transducer for electrical signalling, comprising a hollow measuring piston and a built in spring arrangement at the end of the measuring piston and integrally assembled in an intelligent connection block suitable to be included in an energy meter.
Figure 11b illustrates in detail the measuring piston and flow channel in an alternative embodiment of the flow transducer according to Figure 11a, comprising a slider tube with holes.
Figure 11c illustrates in detail a view of the upper part of the flow transducer according to Figure 11a or 11b with a window for visual read out of the instantaneous flow.

### DESCRIPTION OF THE DRAWINGS

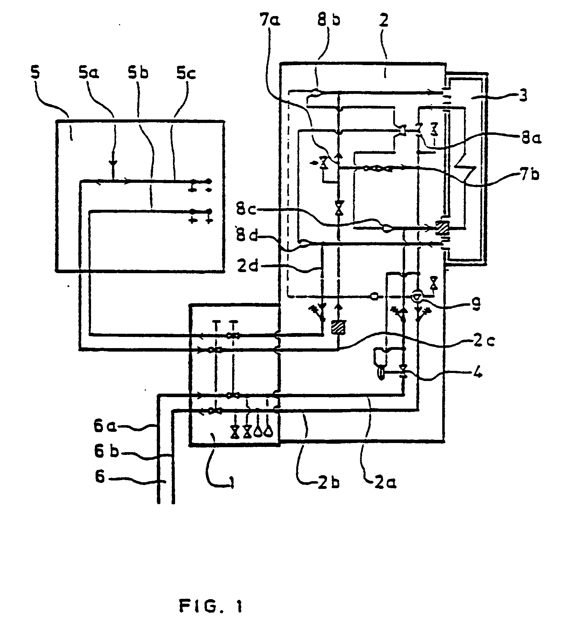

The descriptions of preferred embodiments are mainly directed to the use of a heat-transferring device according to the present invention as central heating in a smaller building. However, the use is not limited to this and a number of suitable applications will appear to be just as interesting and obvious to a man skilled in the art, based on the description in its entirety and on the following description of preferred embodiments in particular. In the schematic Figures 1-3, as far as is possible, adopted or generally accepted symbols in the field have been used for the components included. For this reason and so as not to unnecessarily burden the figures and the description of the figures, and thus possibly make the description of the invention unclear, not all the components shown have been given reference numbers.

Figure 1 is a schematic circuit diagram comprising a coupling block 1, a heat exchanger 3, an intelligent connection block 2, a consumer 5, for instance a domestic hot water system and an external hot water source 6, such as a hot water boiler. The heat exchanger 3 in Figure 1 is, for example, a water heater 3, supplied with cold water which is heated with the hot water from the boiler 6, which passes through the heat exchanger 3 in opposite direction to the cold water. The heat exchanger comprises inlets for the cold water and outlets for the heated domestic hot water as well as inlets for incoming hot water and outlets for the return of the hot water. The intelligent connection block 2 comprises main connections for inflow and outflow of the two fluids out of the device from and/or to the boiler, domestic hot water system, respectively, sub-connections for joining to the heat exchanger's 3 inlets and outlets, and inner channels 2a, 2b, 2c, 2d which connect a main connection to the corresponding sub-connection, which is described in the following. In certain embodiments it is advantageous to co-ordinate all the main connections to connect to a coupling block 1 on one of the large surfaces of the intelligent connection block 2.

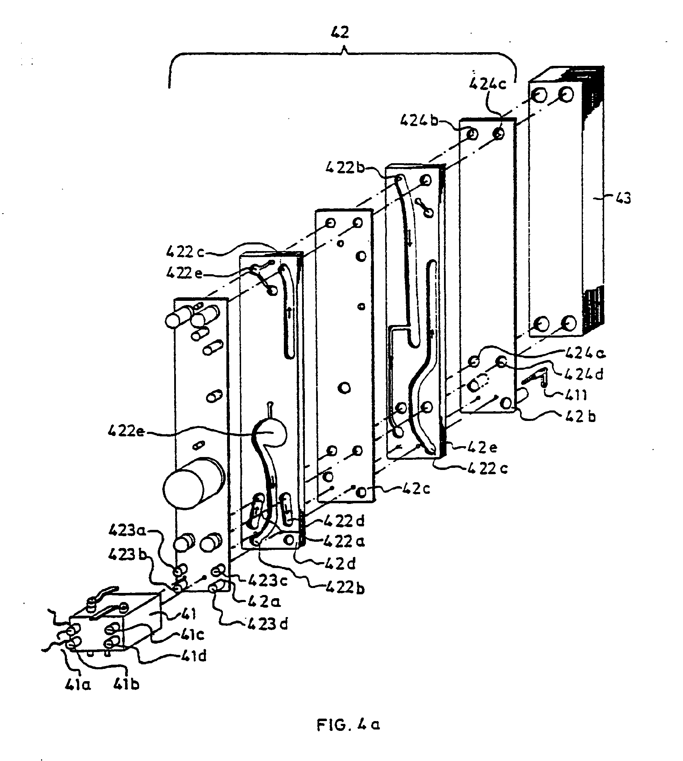

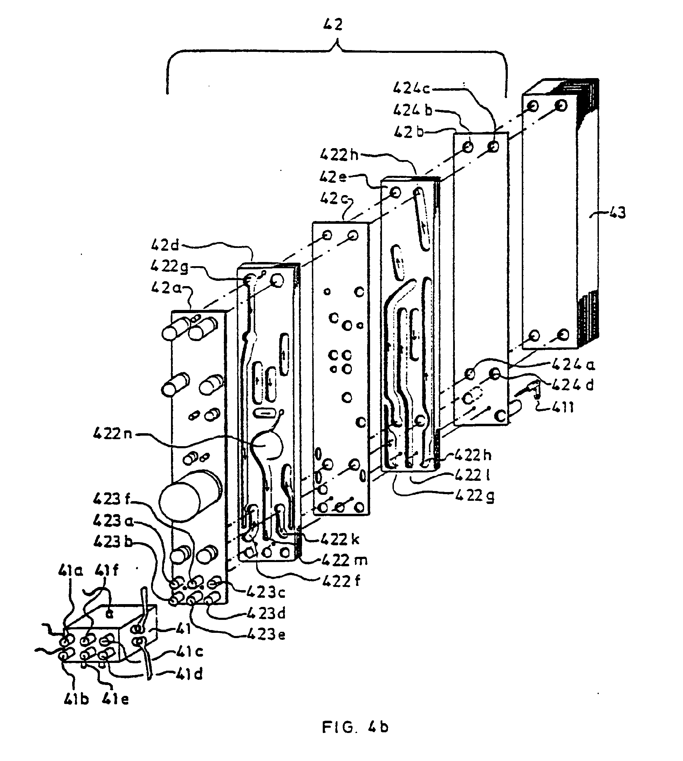

Dependent upon outer connecting systems such a coupling block may be arranged on the side of the large surface turned away from the heat exchanger, such as is illustrated in Figure 1, or on the opposite large surface. It is even advantageous to arrange the coupling block 1 with connecting valves and to co-ordinate opening and closing of two or several of said valves. Furthermore, from the point of view of production and flexibility it is advantageous to use an intelligent connection block according to the embodiment of the invention illustrated in Figure 4a. Said embodiment comprises a number of channel plates piled and joined to each other, two end pieces and an intermediate sheet, where the channel plates have recesses or by means of intermediate walls achieve separations, which in the assembled connection block interact and form the inner channels and other inner cavities when required. In many cases it is preferred, in order to acquire great flexibility in the hydraulic production's adaptation and optimum rational production, that one or several of the channel plates are, in their turn, built up of a plurality of thin sheet formed elements which are joined together. Preferably soldering is used to join together the channel plates, the end pieces, the intermediate sheets and/or the sheet formed elements.

The cold water enters the heat transferring device by means of a first main connection and is lead to the hot water heater's 3 inlets via a first inner channel 2c arranged in the block 2 and a first sub-connection to the inlet for domestic water of the water heater's 3 secondary fluid, and into and through the water heater 3, where it is heated by boiler hot water which passes the water heater 3 in counter flow to the domestic water. The heated domestic water, the domestic hot tapwater, leaves the water heater 3 and is lead into the connection block 2, and then via a second inner channel 2d, to a second main connection, which connects to a system 5b having one or several drawing off sites for domestic hot water. The first inner channel 2c for supplying cold water to the water heater 3 has also a flow distribution means, in Figure 1 illustrated as a branch pipe 7a.

Said branch pipe 7a makes it possible to refill water to the external primary fluid circuit 6, which in the embodiment according to Figure 1 consists of a hot water circuit 6, such as, for example, a boiler water circuit. Hot boiler-water 6a is supplied to the device via a third main connection and is lead via a third inner channel 2a to a third sub-connection which joins to the water heater's 3 inlet for boiler-water, primary fluid, through the water heater 3 and out to a fourth sub-connection on the connection block 2, where the boiler-water's return is lead via a fourth inner channel 2b to a fourth main connection and returns as boiler-water return 6b to the boiler. The fourth inner channel 2b for the boiler-water's return comprises a second branch pipe 7b, which is placed in communication with branch pipe 7a in the first inner channel 2c, and hereby, when required, supply new water in the form of cold water to the boiler-water's return 6b, for example for filling up an expansion vessel, not shown, joined to the circuit. The third inner channel 2a, for providing boiler hot water to the water heater, comprises a valve 8a, which regulates the flow of the boiler-water through the water heater 3 based on the flow of domestic water in the water heater 3. In Figure 1 the valve 8a is placed in channel 2b so as to regulate the outflow from the heat exchanger 3 based on the cold water inflow. This inflow is monitored by means of a flow transducer 8b arranged in the channel 2c which supplies cold water to the water heater, the flow transducer 8b being associated with the valve 8a. The flow transducer 8b may even be electrically associated with a circulation pump 9 for the boiler-water, which preferably is arranged to start at a generated signal by the flow transducer 8b at a predetermined flow and reversibly stop at different flow. The pump 9 generates its pumping force directly in or in immediately vicinity to the connection block. The valve 8a may, when required, be associated with a number of compensating units 8c, 8d. Said units compensate the control valve's opening on the basis of further variables, such as temperature of the boiler-water which is supplied to the water heater 8c, or the temperature of the domestic hot water which leaves the water heater 8d. This last mentioned compensation which does not form part of the invention is often to be looked upon as a security measure to avoid injury to consumers and may, thus, when required be associated with means which can quickly cut off the boiler-water supply so as to quickly reduce the domestic hot water temperature. The third inner channel 2a can even comprise a differential pressure valve 4, for maintaining the differential pressure constant between incoming primary fluid after valve 4 and the primary fluid's return prior to the pump 9. Obviously this assembly of a heat-transferring device according to the invention may be used for other purposes requiring the production of heating and cooling media.

In Figure 1, the consumer comprises a cold water source 5a, a drawing-off system 5b for the water produced in the heat-transferring device, a drawing off system 5c for cold water.

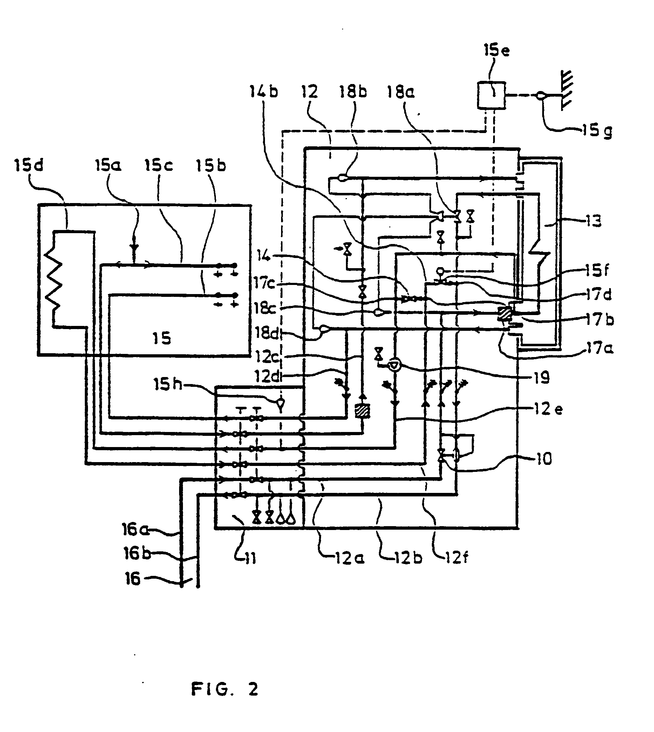

The illustrated device in Figure 2, is for instance, a central heating unit for the production of domestic hot water 15 b and hot water for a heating system 15d intended to be used in a smaller building 15. The heating station comprises a coupling block 11, an intelligent connection block or plate 12, a heat exchanger 13 for producing hot domestic tapwater, and a shunt circuit comprising a shunt conduit 14, for producing hot water for the heating system 15d of the building. The connection block 12 comprises inner channels 12a-12f, flow distribution means 17a, 17b, flow accumulation means 17c, 17d, main connections, sub-connections and controlling means 15f, 18a, 18b, 18c, 18d, for the thermal processes. The coupling block 11 includes means for connecting the heat-transferring device according to the present invention to an external hot water source 16, for instance a district heating network, a consumer 15 having one or several circuits 15b, 15d connected to the heat transferring device, for example a heating system 15d and hot tapwater system 15b. The district heating network 16 connects to the coupling block 11 by means of an inlet for district heating hot water 16a and an outlet for district heating return 16b. The consumer is a smaller building, for example, having a cold water source 15a, a tap circuit having one or several drawing-off sites for hot water 15b, a tap circuit having one or several drawing-off sites for cold water 15c and a heating system 15d. The hot water system 15d may be associated with a control unit 15e and a sensor 15g for reading the outdoor temperature and a sensor 15 h for reading the temperature of the water supplied to the hot water system 15d. The sensors 15g, 15h and the control unit 15c can be associated with the heat transferring device to control the production of hot water in the heating system, for instance control the control unit 15e introduction of new primary hot water in the heating system 15d. This introduction of water is directly controlled by a valve 15f which influences the return from the heating system to the district heating return, The control unit 15e may also be associated with sensors for reading the temperature inside the building.

The heat exchanger 13, for example, is arranged to produce hot tapwater and supplies cold water that heats together with hot water, for instance district heating water, which passes through the heat exchanger in counter flow to the cold water. The heat exchanger 13 comprises inlets for cold water and outlets for hot tapwater as well as inlets for incoming district heating water 16a and outlets 16b for return of district heating.

The intelligent connection block 12 comprises
- main connections for incoming district heating, district heating return, incoming cold water, domestic hot water, incoming return from the heating system and outgoing heated water to the heating system.
- sub-connections for connecting the inlets and outlets of the heat exchanger and for connecting to the shunt circuit.
- inner channels 12a, 12b, 12c, 12d, 12e, 12f, joining a main connection to corresponding sub-connection, which will be described more in detail in the following,
- flow distribution means 17a for dispersing incoming hot district heating water 12a between the heat exchanger 13 and the shunt circuit, flow distribution means 17b for dispersing the return 12f of the heating system between the shunt conduit 14 and the channel 12b for the return of the district heating water, flow accumulation means 17d for accumulating return from the heat exchanger 13 and the shunt circuit, flow accumulation means 17c for, via the shunt circuit, bringing together by means of channel 12a incoming district heating water and return from the heating system 15d via the shunt conduit 14,
- controlling means 15f, 18a,18b,18c,18d for controlling and monitoring the thermal processes,
- means for cleaning, pressure control, pressure release system, flow direction control, temperature monitoring etc.,
- circulation pump 19 for the return from the heating system,
- differential pressure valve 10 for maintaining the constant of the pressure difference between the inlet 12a of the district heating water subsequent to the valve 10 and district heating return 12b.

Furthermore, in certain embodiments it is advantageous to co-ordinate all the main connections connected to a coupling block 11 on one of the large surfaces of the intelligent connection block. Depending upon externally connected systems, such a coupling block 11 may be arranged on the large surface turned away from the heat exchanger 13 or on the opposite corresponding large surface. It is also advantageous to arrange the coupling block with connection valves for the inlets and outlets of the external circuits, to and from, respectively, the heat transferring device and to co-ordinate opening and closing of two or more of these valves. Furthermore, from the viewpoint of production and flexibility, it is advantageous, according to the embodiment of the invention shown in Fig 4b, to use an intelligent connection block that includes end pieces, intermediate plates and a plurality of connected channel plates piled on each other, where the channel plates have recesses, or by means of the intermediate walls form separations, which in the composite connection block co-operate and form the inner channels and other inner cavities, as required. In many cases in order to achieve great flexibility for the adaptation of hydraulic production and optimum rational production, it is preferred that one or several channel plates, in their turn, are built up of a plurality of thin plate-formed elements which are bonded together. Soldering is preferably used to bond the channel plates, the end pieces, the intermediate plates and/or the plate-formed elements.

Incoming district heating water, which typical for the application of the device has essentially a constant temperature of about 65° C , is supplied to the device by means of an inlet 16a via the coupling block 11 to a first main connection arranged on the intelligent connection block 12, and is lead along by means of an inner channel 12a, in which it is dispersed at a distribution point 17a, between the heat exchanger 13 for the production of hot tapwater to the domestic hot tap water circuit 15b and the shunted return of heating water 12e, 12ff, the shunt conduit 14 and the heating system 15d. The distribution point 17a, as has been indicated in Figure 2, may be a channel branch in which a channel for supplying district heating to the shunt circuit is joined to the channel. The channel branching may also be carried out as a starting point for two pipes, one arranged in the other, where one of the channels is formed by the outer cavity between the pipe walls, and the second channel by the inner pipe's interior. The channel 12a connects to the counter flow branching 17a to the sub-connection for incoming district heating water to the heat exchanger 13 and the channel 12e connects to the shunt circuit with shunt conduit 14 and the heating system 15d associated therewith.

Some of the district heating water leaves the intelligent connection block 12 and is subsequently lead to the heat exchanger's 13 inlet for incoming district heating water through the heat exchanger 13 in counter flow to the heated hot tapwater in the heat exchanger 13. The district heating water leaves the heat exchanger 13 by an outlet connecting to the sub-connection of the intelligent connection block 12 and along channel 12b, where at the distribution point 17d, mixes with the return water from the heating circuit 15d and the shunt circuit via channel 12f and channel 14b, prior to leaving the connection block 12 and device through the main connection for the district heating return 16b.

Another part of the district heating water continues to the intelligent connection block 12 and is lead to the shunt circuit, which is associated with the heating system and comprises a shunt conduit 14 having a check valve and a distribution point 17a and an accumulation point 17c. The shunt conduit 14 is arranged to supply return from the heating system 15d to the district heating water at the accumulation point 17c before the mixed water is supplied to the heating system 15d. The heating system's return water supplied by the shunt conduit 14 is taken from distribution point 17b, in counter flow to the heating system 15d, and has a lower temperature than incoming district heating water, whereby the temperature of the water supplied to the heating system may be regulated. The district heating water leaves the shunt circuit in the intelligent connection block 12 via the channel 14b and control means 15f and continues in channel 12b. There, at the accumulation point 17d, it is mixed with the district heating return from the heat exchanger 13, before it leaves the intelligent connection block 12 and the device through the main connection for district heating return water 16b.

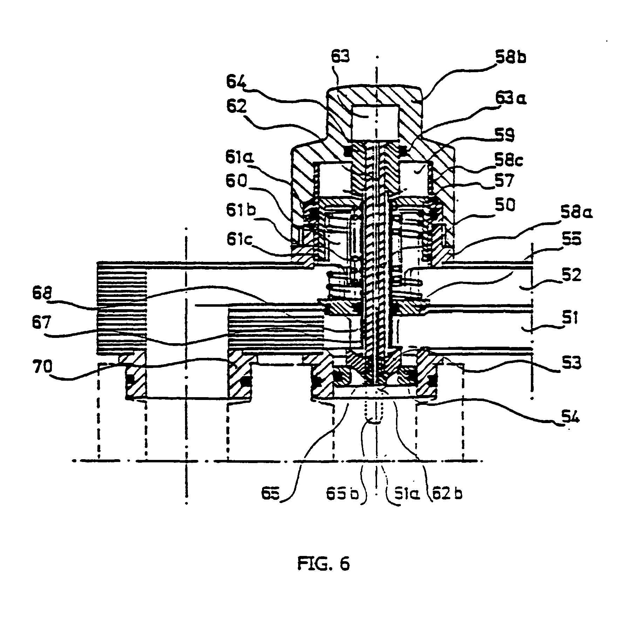

The inner channel 12a may be arranged with a differential pressure valve 10, according to Figure 6, for maintaining the constant of the pressure difference between incoming district heating water in channel 12a after the valve 10 and the district heating return in channel 12b at valve 10.

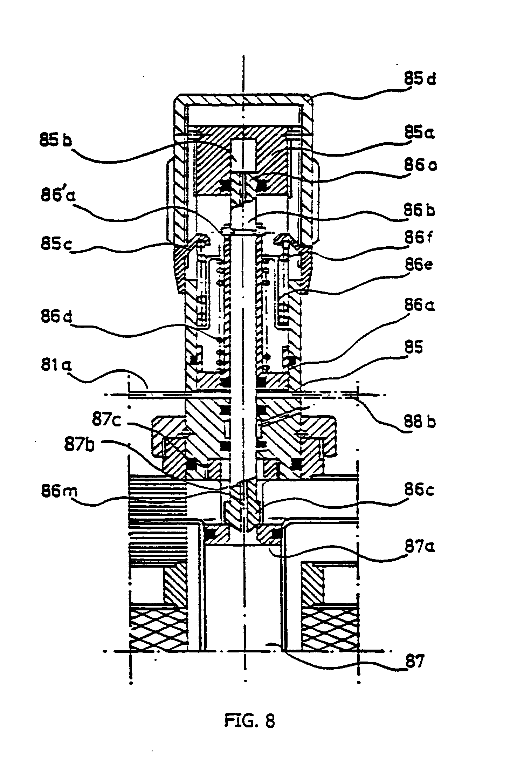

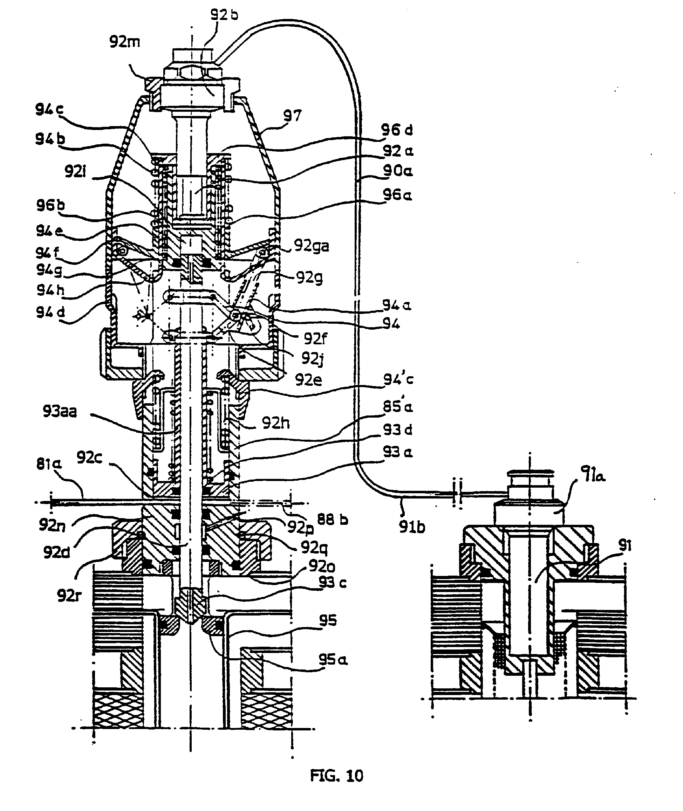

The inner channel 12b comprises a controlled valve 18a, preferably of the type described more in detail with reference to Figures 8 and 10. The valve 18a, positioned in channel 12b for district heating return water from the heat exchanger 13, controls the flow of the district heating water through the heat exchanger 13 on the basis of the flow of the incoming tap water in the channel 12c, which is monitored by means of control valve 18a associated with flow transducer 18b. When required the setting of the valve 18a is adjusted to influence the incoming district heating flow by means of compensating units 18c, 18d. These units sense the temperature of the incoming district heating water in channel 12a and the temperature of the outgoing domestic hot water in channel 12d, respectively, by means of temperature sensors 18c, 18d arranged in said channels, which are associated with the valve 18a. Obviously a similar valve or a conventional valve 15f can be arranged for the shunt circuit to control the outlet of the district heating water in said circuit.

Cold water for the production of domestic hot water is supplied to the heating station by means of a main connection on the intelligent connection block 12 and is then lead through an inner channel 12c, in which the flow transducer 18b is arranged, to the inlet for cold water of the heat exchanger 13. The water is then heated during the passage through the heat exchanger 13 of the counter flowing district heating water. The heated domestic hot water leaves the heat exchanger 13, is supplied to the intelligent connection block 12 and is lead through channel 12d to the main connection, which joins to a system 15d comprising at least one drawing off site for domestic hot water. When required, a temperature sensor 18d is arranged in channel 12d for sensoring the temperature of the domestic hot water and when the temperature is too high, influence the outflow of the district heating water out of the heat exchanger and thereby the thermal process in the heat exchanger 13, by means of the control valve 18a. Scalding protection is obtained by such a method, which does not form part of the invention.

Return water from the building's heating system 15d is supplied through a main connection arranged on the intelligent connection block 12 and is then lead through an inner channel 12e further into the shunt circuit previously described comprising a shunt conduit 14, channel 14b, control valve 15f and the heating system 15d. The water tempered by the shunt for the heating system 15d, in counter current to the shunt circuit, is supplied thereafter to the intelligent connection block 12 and via a channel 12a to the main connection, from where it is lead out into the heating system 15d to the circulation pump 19, which generates its pumping effect directly in or adjacent to the intelligent connection block 12.

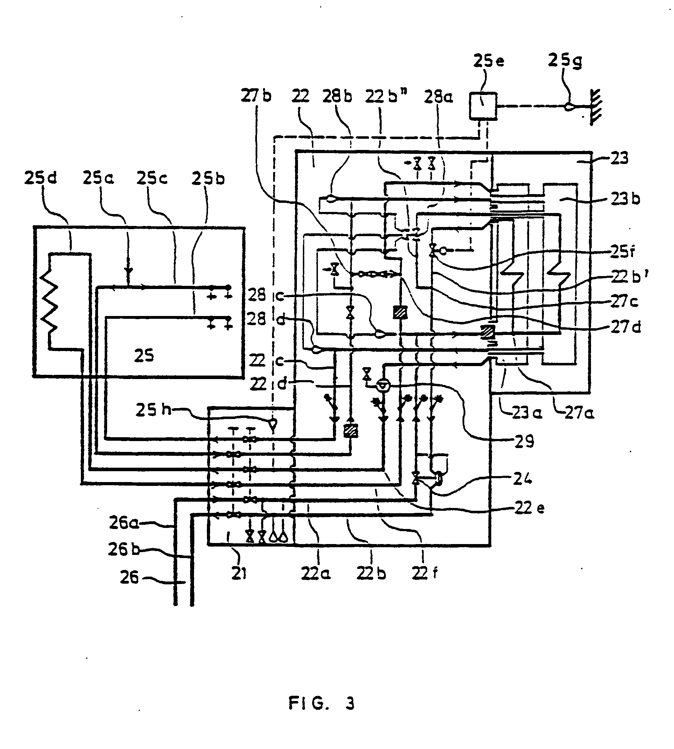

Figure 3 illustrates a preferred embodiment of a heating station for the production of domestic hot water to a drawing off circuit 25b and hot water for a heating system 25d intended for use in a smaller building, comprising a composite heat exchanger for simultaneous production of domestic hot water and hot water for heating. The heating station comprises a coupling block 21, an intelligent connection block or plate 22, in-built heat exchanger having a first heat exchanger 23a, arranged for the production of hot water for the heating system 25d for the building and a second heat exchanger 23b for producing domestic hot water 25b. The intelligent connection block 22 comprises inner channels 22a-22f, flow distributing means 27a, 27b, flow accumulating means 27c, 27d, main connections, sub-connections and controlling means 25f, 28a, 28b, 28c, 28d for the thermal processes. The coupling block 21 comprises means for connecting the heat transferring device according to the present invention to an external hot water source 26, for example, to a district heating network, a consumer 25 with one or several circuits 25b, 25d connected to the heat transferring device, such as a heating system 25d and a domestic hot water system 25b. The district heating network 26 connects to the coupling block 21 by means of an inlet 26a for the district heating hot water and an outlet 26b for the district heating return water. The consumer is, for example, a smaller building 25 having a cold water source 25a, a drawing off circuit with one or several drawing off sites for hot water 25b, a drawing off circuit with one or several drawing off sites for cold water 25c, a heating system 25d. The heating system 25d may be associated with a control unit 25e having a sensor 25g for monitoring the outside temperature and a sensor 25h for monitoring the temperature of the water supplied to the heating system 25d, which may be associated with the heat transferring device controlling the tempering of the hot water in the heating system, for example control the control unit's 25e inflow of district heating water to the heat exchanger 23a for the heating system 25d. This inflow is indirectly controlled by a valve 25f, which influences the district heating return water from the heat exchanger 23a. The control unit 25e may also be associated with sensors for monitoring the temperature inside the building.

Both plate heat exchangers 23a, 23b of the heat exchanger have inlets and outlets arranged on the end piece which is arranged against the intelligent connection block 22. The first heat exchanger 23a lies, thus, against the second heat exchanger 23b in such a manner that the first heat exchanger 23a is positioned with its outer end piece against the connecting end piece of the second heat exchanger 23b. The first heat exchanger 23a has a through channel arranged inside the inlets, outlets, respectively, in which the second heat exchanger 23b comprises inlets and outlets, of which at least three are arranged with extending attachments, which are inserted into or go through the through going channel of the first heat exchanger 23a. The through going channels and the attachments are preferably arranged to make up integral parts of the heat exchanger's inlets and outlets. The inlets and outlets of the plate heat exchanger 23a, 23b are preferably arranged in such a manner so that;
- the channel for the district heating water inlet in the second heat exchanger 23b is joined together or arranged inside the inlet of the first heat exchanger 23a,
- the channel for the district heating water outlet from the second heat exchanger 23b is arranged inside the outlet of the first heat exchanger 23a,
- the channel for the cold water inlet in the second heat exchanger 23b is arranged inside the inlet of the first heat exchangers 23a for the heating system, and
- the channel for the domestic hot water outlet from the second heat exchanger 23b is arranged inside the outlet for the heating system of the first heat exchanger 23a.

The intelligent connection block 22 comprises;
- main connections for incoming district heating, district heating return, incoming cold water, domestic hot water, incoming return from the heating system and outgoing heated water to the heating system,
- sub-connections for connecting to the inlets and outlets of the heat exchanger and for connecting to the shunt circuit,
- inner channels 22a, 22b, 22b', 22b", 22c, 22d,22e,22f, joining a main connection to the corresponding sub-connection, which is described more in detail in the following,
- flow distribution means 27a to disperse incoming district heating water 22a between the plate heat exchangers 23a and 23b, flow distribution means 27b for dispersing cold water to the hot water system 25d for refilling, flow accumulation means 27c to accumulate return 22b' and 22b" from the heat exchangers 23a and 23b and flow accumulation means 27d to mix together cold water and water from the heating system for refilling the heating system 25d and its expansion vessel, not shown,
- controlling means 25f,28a,28b,28c,28d for controlling and monitoring the thermal processes
- means for cleaning, pressure control, pressure release, flow direction control, temperature monitoring etc.
- circulation pump 29 for the water of the heating system 25d
- differential pressure valve 24 for maintaining the pressure difference constant between the inlet 22a of the district heating water after the valve 24 and return 22b.

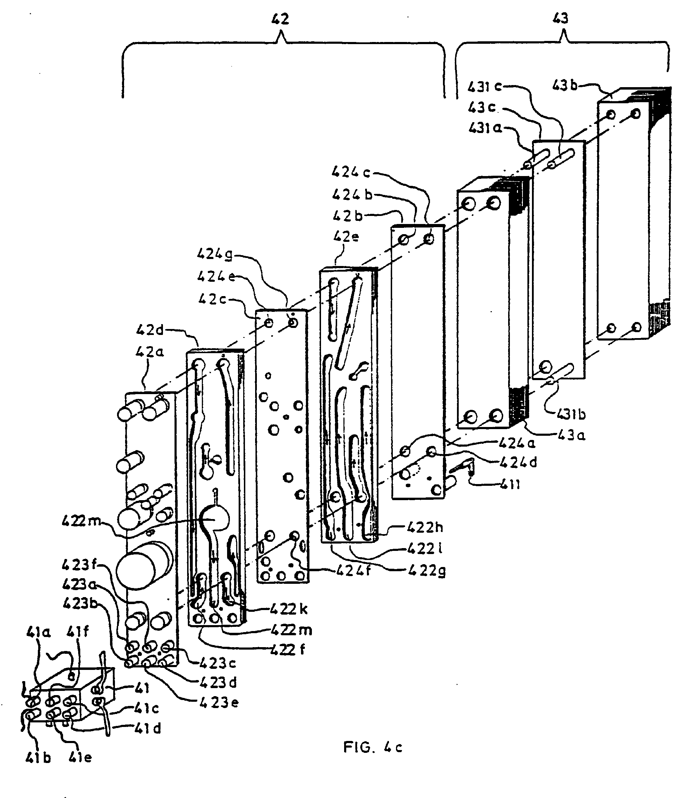

As with the heating station in Figure 2, it is in certain embodiments of the heating station illustrated in Figure 3 advantageous to co-ordinate all the main connections in the intelligent connection block to couple with the coupling block 21 on one of the large surfaces of the intelligent connection block 22. Dependent upon external connecting circuits 25a,25b, 25d, 26 such a coupling block may be arranged on the large surface turned towards the heat exchanger or on the opposite corresponding large surface. It is also advantageous to arrange the coupling block with connecting valves and to co-ordinate opening and closing of two or several of these valves. Furthermore, from the viewpoint of production and flexibility, it is advantageous, according to the embodiment of the invention shown in Fig 4c, to use an intelligent connection block 22 that includes a plurality of connected channel plates piled on each other, two end pieces and one or several intermediate sheets, where the channel plates have recesses, or by means of the intermediate walls form separations, which in the composite connection block co-operate and form the inner channels and other inner cavities, as required. In many cases in order to achieve great flexibility for the adaptation of hydraulic production and optimum rational production, it is preferred that one or several channel plates, in their turn, are built up of a plurality of thin plate-formed elements which are bonded together. Soldering is preferably used to bond the channel plates, the end pieces, the intermediate plates and/or the plate-formed elements to the intelligent connection block.

Incoming district heating water is lead via a district heating inlet 26a and supplied to the device via a connection plate to a first main connection arranged on the intelligent connection block 22 and is lead along by means of an inner channel 22a in which it is dispersed, at the distribution point 27a, between a first heat exchanger 23a for producing hot water for the building's heating system 25d and a second heat exchanger 23b for producing domestic hot water to the building's hot tapwater system 25b. The distribution point 27a may be a channel branch or, as illustrated in the Figures, consist of a common inlet channel for both plate heat exchangers 23a and 23b for supplying district heating water to the plate heat exchangers 23a, 23b. In the illustrated embodiment, the distribution point 27a in practice consists of a plurality of separate distribution points extending through the entire inlet channel of the plate heat exchanger 23a, which in number equal the number of plate channels for the district heating in the plate heat exchanger 23a.

Thus, the district heating water exits from the intelligent connection block 22 and is lead via sub-connections and the common inlet channel for the heat exchanger previously described, wherein some is distributed to the inlet of the heat exchanger 23a arranged for incoming district heating water, for producing hot water to the heating system 25d and is lead through the heat exchanger 23a in counter flow to the heated hot water in the heat exchanger 23a for the heating system 25d. The district heating water leaves the heat exchanger 23a in the outlet connected to the sub-connection of the intelligent connection block 22 and then into channel 22b' where, at the accumulation point 27c, it is mixed with the return from the second plate heat exchanger 23b arranged for producing domestic hot water, before leaving the intelligent connection block 22 and the device through the main connection for district heating return 26b.

Another part of the district heating water which exits the intelligent connection block 22 is lead to the plate heat exchanger 23b for producing the domestic hot water to the hot tapwater circuit 26b. The district heating water is lead in counter flow towards the tapwater through the plate heat exchanger 23b and exits the plate heat exchanger 23b and is returned to the intelligent connection block 22 and along through the channel 22" to the accumulation point 27c, where it is mixed with the return from the heat exchanger 23a, before it leaves the intelligent connection block 22 and the heating station through the main connections for the district heating return 26b.

The inner channel 22a preferably comprises a differential pressure valve 24, according to Figure 6, for maintaining the pressure difference constant between incoming district heating water in the inlet channel 22a after the valve 24 and the return in the outlet channel 22b at valve 24.

The inner channel 22b" comprises a valve 28a, preferably of the type described more detailed with reference to Figures 7 and 7 and Figure 7 or 9 and 10. The valve 28a, which is arranged in the channel 22b" for return from the hot tapwater heat exchanger 23b controls the flow of district heating water through the heat exchanger 23b based on the flow of incoming tap water in the channel 22d, which is monitored by means of a flow transducer 28b associated with the valve 28a. When required, the setting of the valve 28a is adjusted to influence the flow of incoming district heating water by means of compensating units 28c, 28d, which monitor the temperature of the incoming district heating water in channel 22a and the temperature of the outgoing hot tap water, respectively, in channel 22c, by means of sensors 28c,28d arranged in these channels which are in unison with the control valve 28a. Obviously a similar valve or a conventional valve 25f may be arranged to control the process in the second heat exchanger 23a.

Cold water for producing domestic hot water is supplied to the heating station through a main connection arranged on the intelligent connection block 22 and then lead through an inner channel 22d, in which the flow transducer 28b is arranged, to the inlet for cold water of the heat exchanger 23b for domestic hot water. The water is then heated during the passing through the heat exchanger 23b of the counter flowing district heating water. The heated domestic hot water exits the heat exchanger 23b at the outlet and is supplied to the intelligent connection block 22 and lead through channel 22c to the main connection, which joins to a system 25b comprising at least one drawing-off site for domestic hot water. When required the temperature sensors 28d may be arranged in channel 22c for monitoring the temperature of the domestic hot water and at high temperatures influence the district heating water's inflow into the heat exchanger 23b by influencing the valve 28a. A scalding guard is thus obtained, which does not form part of the invention.

Return water from the building's heating system 25d is supplied to the heating station through a main connection arranged on the intelligent connection block 22 and is then lead through an inner channel 22f to and further into the first heat exchanger 23a of the previously described heat exchanger. The tempered water for the heating system 25d in the heat exchanger 23a is supplied again to the intelligent connection block 22 through a sub connection and lead further into the block 22 to the circulation pump 29 of the heating system circuit, which generates its pumping effect directly in or adjacent to the intelligent connection block 22 and continues via channel 22e to the main connection, from where it is lead out of the heating system 25d.

Figures 4a, 4b and 4c, illustrate a partly disassembled heat transferring device according to preferred embodiments of the invention corresponding to the Figures 1-3 illustrated in a schematic manner. The devices, which are very compact, comprise heat exchangers 43, 43a, 43b, intelligent connection block 42 and coupling block 41. The heat exchanger 43 or the heat exchangers 43a, 43b are so-called plate heat exchangers, which have all their inlets and outlets arranged on the same large surface, end piece.

The heat transferring device according to Figure 4a is preferably intended to be used as water heater and comprises a coupling block, an intelligent connection block 42 with two end pieces 42a, 42b, an intermediate plate 42c and a plurality of thinner plate formed channel plates 42d, 42e bonded together and a plate heat exchanger 43. The end pieces, the intermediate plate and the channel plates 42a-42e have holes and recesses i. a. 422a-422e, which when the end pieces, the intermediate plate and the channel plates 42a-42e are assembled together into an intelligent connection block 42, form inner channels for:
- incoming primary fluid 422a, preferably hot water, such as boiler hot water;
- primary fluid return 422b, boiler water return;
- incoming secondary fluid 422c, preferably cold water; and
- outgoing secondary fluid 422d, domestic hot water;
as well as other inner cavities i. a. 422e, suitable to contain integral functional equipment in or on the intelligent connection block such as thermometers, control valves, filters, sensors, pumps, refilling-, drawing-off-, pressure release and pressure control valves, differential pressure regulator and similar components. The end pieces furthermore comprise connecting attachments 423a-423d for the four connections to the two external systems and may include connecting attachments 424a-424d for the heat exchanger. The end pieces also comprise necessary attachments for securing and assembling the aforementioned integral equipment. The composite channel block and its parts also comprise holes for insertion of a lockable fastening device 411 to the coupling block 41. In many cases it is preferable, in order to achieve great flexibility for adaptation of the hydraulic equipment and optimum rational production, that one or several of the channel plates are built up of a plurality of thin plate formed elements which are bonded together. Preferably soldering is used to bond the channel plates, the end pieces the intermediate plates and/or the plate formed elements.

The heat transferring device according to Figure 4b is preferably intended to use as a heating station in a smaller building for the preparation of domestic hot water and hot water for a heating system to heat the premises. The heating station comprises a coupling block 41, an intelligent connection block 42 with two end pieces 42a, 42b, an intermediate plate 42c and a plurality of thinner plate formed elements bonded to channel plates 42d, 42e and a shunt circuit, comprising an external heating circuit and a shunt pipe arranged on the intelligent connection block and a plate heat exchanger 43. Channel plates 42d, 42e between the intermediate plate 42c and the end pieces 42a, 42b have holes and recesses i. a. 422f-422n, which when the end pieces 42a, 42b, the intermediate plate 42c and the channel plates 42d-42e are assembled together into an intelligent connection block, form inner channels for:
- incoming primary fluid 422f, preferably hot water, such as district heating water;
- primary fluid return 422g, district heating return;
- incoming first secondary fluid 422h, preferably cold water;
- outgoing first secondary fluid 422k, domestic hot water;
- incoming second secondary fluid 4221, preferably return water from the heating system; and
- outgoing second secondary fluid 422m, hot water to the heating system, as well as other inner cavities i. a. 422n, suitable to contain integral functional equipment in or on the intelligent connection block such as thermometers, control valves, filters, sensors, pumps, refilling-, drawing-off-, pressure release and pressure control valves, differential pressure regulator and similar components. The end pieces furthermore comprise connecting attachments 423a-423f for the six connections to the three external systems and also may include, as illustrated in the figures, connecting attachments 424a-424d for connecting to the heat exchanger. The end pieces also comprise necessary attachments for securing and assembling the integral equipment as previously described. The composite channel block and its parts also comprise holes for insertion of a lockable fastening device 411 to the coupling block 41. In many cases it is preferable, in order to achieve great flexibility for adaptation of the hydraulic equipment and optimum rational production, that one or several of the channel plates are built up of a plurality of thin plate formed elements which are bonded together. Preferably soldering is used to bond the channel plates, the end pieces the intermediate plates and/or the plate formed elements.

The heat transferring device according to Figure 4c is preferably intended to be used as a heating station for a smaller building for the preparation of domestic hot water and hot water for a heating system for heating the premises. The heating station comprises a coupling block 41, an intelligent connection block 42 with two end pieces 42a, 42b, an intermediate plate 42c and a plurality plate formed channel plates 42d, 42e and two plate heat exchangers 43a 43b and an intermediate end piece 43c, which alternatively is replaced by four intermediate attachments, arranged between the heat exchangers 43a, 43b. The intermediate end piece 43c, which is soldered between the plate heat exchangers 43a and 43b, is arranged with three attachments 431a,431b.431c extending through the plate heat exchanger's 43a connecting channels which connect with the corresponding connection attachments 42c of the intermediate plate. Alternatively, when the intermediate end piece 43c is replaced by intermediate attachments, the intermediate attachments 424e,424f,424g are lengthened so as to extend into the intermediate attachments.

The end pieces 42a, 42b, the intermediate plate 42c and the channel plates 42d-42e have holes and recesses i. a. 422f-422n, which when assembled together into an intelligent connection block 42, form inner channels 422f-422n for:
- incoming primary fluid 422f, preferably hot water, such as district heating water;
- primary fluid return 422g, district heating return;
- incoming first secondary fluid 422h, preferably cold water;
- outgoing first secondary fluid 422k, domestic hot water;
- incoming second secondary fluid 4221, preferably return water from the heating system; and
- outgoing second secondary fluid 422m, hot water to the heating system,
as well as other inner cavities i. a. 422n, suitable to contain integral functional equipment in or on the intelligent connection block such as thermometers, control valves, filters, sensors, pumps, refilling-, drawing-off-, pressure release and pressure control valves, differential pressure regulator and similar components. The end pieces 42a,42b and the intermediate plate 42c furthermore comprise connecting attachments 423a-423f for the six connections to the three external systems and also may include, when required, connecting attachments 424a-424f for connecting to the heat exchangers. The end pieces also comprise necessary attachments for securing and assembling the integral equipment as previously described. The composite channel block and its parts also comprise holes for insertion of a lockable fastening device 411 to the coupling block 41. In many cases it is preferable, in order to achieve great flexibility for adaptation of the hydraulic equipment and optimum rational production, that one or several of the channel plates are built up of a plurality of thin plate formed elements which are bonded together. Preferably soldering is used to bond the channel plates, the end pieces the intermediate plates and/or the plate formed elements.

These compact devices built up of specially designed plate heat exchangers 43, 43a,43b and 43c, preferably with an intelligent connection block have great flexibility regarding the configuration and dimensioning of the inner channels 422a-422d, 422f-422m and provide favourable conditions to simply and reliably integrate the controlling means with sensors, compensating units and valves or other adjusting means in other cavities and recesses 422e, 422n available in the intelligent connection block. The end pieces 42a, 42b, the intermediate plate 42c and the channel plates 42d, 42e are brought together in a pile, whereby the holes and recesses i. a. 422a-422e and 422f-422m will form inner channels for the fluids and cavities to contain the aforementioned components. One advantage obtained by the flexibility provided by means of a channel block 42, built up of channel plates is that the inner channels which are formed by the recesses 422a-422e and 422f-422m may be simply arranged by replacing plate or level if required and thus avoid any hindrance in the way, such as another channel, a fastening device, auxiliary equipment or the like.

Such interchanging or shifting of channels between plates or levels in the intelligent connection block may also be well founded when one needs to change the direction of the channel to obtain optimum placing of filters, pumps, valve regulators, sensors and the like, especially for optimum orientation of the seat, bushings and the like for such equipment. In preferred embodiments where each channel plate 42d, 42e is built up of a plurality of thinner plate formed elements, not shown, the channels and the dimensions and configuration of the inner cavities i. a. 422a-e, 422f-m may be determined by means of the configuration, thickness, number and piling sequence of the plate formed elements. By means of this intelligent connection block comprising inner channels, which are formed by recesses, i. a. 422a-422e and 422f-422m, when the thinner plate formed elements included in the channel plates 42d, 42e are piled together with the end pieces 42a, 42b and the intermediate plate 42c in the desired order on one another, good conditions are made available to achieve easily an intelligent connection block having a high level of functional integration. For example, the filter units, the differential pressure regulator, pumps and control valves, flow transducers, temperature sensors and similar equipment may be installed integrally with the recesses in the intelligent connection block and with connections on suitable outer areas on the intelligent connection block. The intelligent connection block is arranged to be joined to a coupling block 41, whereby the intelligent connection block and all the main connections' coupling attachments arranged together on one end piece. The intelligent connection block may be completely integrated as one end of the adjacent heat exchanger 43,43a. The intermediate plate 42c and the end pieces 42a,42b of the channel plates 42d,42e, can be produced according to several conceivable methods, such as: cut out or stamped out of material having varied thickness, which gives great flexibility for adaptation. The channel plates 42d,42e may also be produced in an inverted manner so that only necessary separating walls are built up in the plates, which in a pile form inner channels in the same way as the recesses. Obviously the channel plates having recesses may be arranged alternatively with channel plates where "the recesses" are formed by intermediate walls. The channel plates may also be "blown" in that two thinner sheets are soldered together except for certain sections where the channel is formed. After soldering air pressure or other pressure media is inserted whereby the unsoldered sections "blow up" and form channels.

A coupling block 41 having co-ordinated main connections 41a-41f with connection valves for closing and opening the primary connections is usually arranged with at least two of the connection valves co-ordinated for simultaneous opening, closing, respectively. According to one embodiment the connection valves for the primary fluid is co-ordinated for simultaneous opening, closing, respectively, of the primary fluid's inlet and outlet. Likewise the connection valves for at least one secondary fluid may be co-ordinated so as to co-ordinate simultaneous opening, closing, respectively of the secondary fluid's inlet or outlet. It is advantageous to co-ordinate at least three connection valves for simultaneous opening, closing, respectively of the outlets and inlets involved. Alternatively in an assembly for two parallel thermal processes, the three connection valves for the inlets for the three fluids may be co-ordinated for simultaneous opening, closing, respectively, of the three fluids' inlets and/or the three connection valves for the outlets of the three fluids' are co-ordinated for simultaneous opening, closing, respectively, of the outlet. Such a coupling block 41, dependent upon prevailing conditions may, as illustrated in Figures 4a,4b,4c, be arranged on the end piece 42a turned away from the heat exchangers 43,43a,43b or on the end piece 42b turned towards the heat exchangers 43,43a,43b.

In order to integrate the control and monitoring equipment in a simple, rational and cost-effective manner with the intelligent connection block without the requirement of costly post-machining of the block after production, adaptation of the assembly both in the intelligent connection block and of the equipment is required. Such an example is illustrated in Figure 6, in two variations, with regard to a control valve. Even if the example specifically relates to a control valve the solution principle also, in applicable areas, may be applied to other integral equipment in the intelligent connection block, such as to filters, temperature sensors, pump, safety valves, etc.

Since the connection block 42 is placed on top of the heat exchanger 43 and is arranged with the channel 422o for outlet of district heating water from the radiator heat exchanger of the device. The channel 422o for the outlet of the district heating water from the device is separated from its outlet channel 422p by a control valve with seating 44h and disk 44c. This seating 44h, is via spokes 44f and a threaded mount 44d provided with a guide 44d fixed against the valve bushing 44a so that a necessary rigid and exact fit i achieved between the seating, disk and bushing. To make the assembly of the seating possible, the mounting has a hole 44d", which is somewhat larger than the outer diameter of the disk. The seating has an O-ring seal 44h', which lies against the intermediate plate of the intelligent connection block and seals the hole between the outlet channels 422o and 422p.

The intelligent connection block 42, above the hole in the intermediate plate has been provided with an attachment 45 adapted and soldered to the valve bushing 44. The bushing 44a with seating, spindle and disk has been lowered down into the intelligent connection block and fixed with a nut 44b or other fixing device to the attachment 45. The sealing between the bushing and the attachment is provided by an O-ring 44a'. By means of the two O-ring seals 44h' and 44a' and their co-ordination, relative high tolerances are allowed in the production of the intelligent connection block with its intermediate plate and its holes as well as fastening attachments, without the assembly being more difficult or risk of leakage. In the upper part of Figure 6, an alternative design has been disclosed where the hole in the intermediate plate is collared downwards, which, among other things allows another O-ring seal of the seating. Obviously such collaring of the hole in the intermediate plate may be arranged upwards.

A heat transferring device according to the present invention comprising an intelligent connection block having inner channels provides uniquely favourable conditions to integrate in the intelligent connection block a differential pressure regulator, in itself simple and at the same time easily produced and cheap, one embodiment of which is illustrated in Figure 6.

The regulator in Figure 6 comprises a spindle 50, which passes through the inner channels 51 for the inlet of the district heating water, FVₜᵢₗₗ, and 52 district hot water return, FVᵣₑₜᵤᵣ arranged in the intelligent connection block according to the invention. The spindle 50 has at one of its ends a valve disk 53, which works against a seating 54 arranged in the main inlet channel 51a for the district heating water. The regulator furthermore comprises an intermediate bushing 55 in the intermediate wall between the channels for FVₜᵢₗₗ and FV_{retur,} 51, 52. The intermediate bushing 55 is kept in place by extension on the pressure chamber lining 58c. The differential pressure regulator illustrated in Figure 6 comprises an attachment 58a with a valve cover 58b, with a first upper pressure chamber 59 arranged on the intelligent connection block, positioned to put pressure on the manoeuvre piston 57 co-ordinated with the spindle 50, which works against the upper area of the manoeuvre piston 57 and creates a closing force which through the manoeuvre piston 57 and the spindle 50 acts upon the disk 53 and the seating 54. To influence the movement of the manoeuvre piston 57 and the working of the valve there is also a second, lower pressure chamber 60 and valve spring 61a,61b, in series, which act against the manoeuvre piston's lower area and create an opening force. The manoeuvre piston's upper pressure chamber 59, which in this embodiment is arranged in a valve cover associated with the intelligent connection block, can in other embodiments be arranged in recesses inside the channel block, as well as the other functions arranged in the valve cover 58, whereby the valve cover comprises an integral part of the intelligent connection block. To reduce the dimensions of the valve and avoid a large membrane and thus a bulky spring the regulator comprises a so-called pressure relieved valve disk. The pressure relief is achieved by the unreduced inlet pressure pₜᵢₗₗ in the channel 51a for FVₜᵢₗₗ, which acts on the active area of the valve disk 53, being lead into an inlaid channel 62 in the station of the spindle 50 up into a third pressure chamber 63. The pressure chamber 63 is, in the embodiment as illustrated in Figure 6, arranged in valve cover 58b. The spindle 50 ends at its upper part which is positioned in the pressure chamber 63, with a piston 64, which is placed against the inner surfaces of the pressure chamber in a manner so as to seal it. In Figure 6 the seal illustrated is in the form of an O-ring, but other sealing embodiments, such as sealing surfaces, may be used. The piston 64 at the end of the spindle is composite with the manoeuvre piston 57 and has a cross-section which corresponds to the active area of the disk. The valve hereby is outbalanced and insensitive to the static pressure. The pressure relief channel 62 has been provided with a mouthpiece 65, which partly comprises fastening screw for the valve disk 53 and partly, due to the channel 62b in the mouthpiece having a lesser diameter than the channel 62 in the spindle, constitutes a reduction in the pressure relief channel 62. Said reduction of the liquid flow in and out of the pressure chamber 63, on pressure changes the valve compensates, suppresses the disk's 53, and thereby the spindle's 50, movement to an adapted and steady rate. If the district heating water is expected to contain particles, which disturb the function of the valve, the mouthpiece 65 may be provided with an inlet filter 65b, for example a sintered, porous ceramic or metallic filter. The pressure from the inlet pressure reduced by the gap opening of the disk against the seating 54 is led up to the manoeuvre piston's pressure chamber 59. This is achieved by the liquid, protected from particles by the disk's rear end, is led via a number of small holes into a channel gap 67, which is formed between the spindle 50 and a casing tube 68 arranged around the spindle. Said gap channel 67 at its end has a plurality of small holes 69 in the upper end of the manoeuvre piston 57 which lead into the upper pressure chamber 59 of the manoeuvre piston. Said varied pressure acts on the upper active area of the manoeuvre piston 57 and creates closing force directed against the valve 54 and strives to close the valve. Said closing force is outbalanced for a desired differential pressure of a superimposed opening force, which is created and influenced by,
- the return pressure which creates from the valve seat a directed opening force by means of the pressure prevailing in the channel 52 for FVᵣₑₜᵤᵣ, act upon the lower active area of the manoeuvre piston, when said channel 52, as illustrated in Figure 6, openly communicates with the pressure chamber 60 for the manoeuvre piston's lower active area, which is essentially integrated in the channel 52 for FV_{retur,} and
- an opening force created by one of the valve springs 61a, 61b, which in the same way is directed from the valve seat 54 and selected and adapted on the basis of the desired differential pressure of the device. In order to be simple, functional and robust when in use in the intended environment, the valve is provided with a differential pressure predetermined and established during production, determined from a specific condition between the manoeuvre piston's 57 active areas in the upper and lower pressure chambers and the force of the spring. Said determined differential pressure is then maintained automatically over the controlled circuits. The spring arrangement, in order to get low proportionate deviations in the valve's regulating ratio even at great variation of opening level, has been provided with a low spring constant despite being situated at a low spring chamber level. i.e. the arrangement has been designed so that sufficient spring force having simultaneous low spring constant is obtained despite relative short spring length. For example, this may be achieved by means of a spring arrangement comprising two springs 61a, 61b having different diameters but the same spring force and spring constant associated with each other via a interconnecting sleeve 61 which binds them together and causes them to co-operate in series and alternately at the same spring chamber level. The valve seat 54, in the embodiment illustrated in Figure 6, is bound together with intermediate bushing 55 and positioned in the part of the channel 51, which comprises the inlet attachment 70 of the channel block for district heating and is sealed against it, in the Figure indicated with O-ring sealing.

The regulator according to Figure 6 is produced and adapted for integration in an intelligent connection block. Obviously it may, according to its basic principles, also be used for an embodiment in a valve housing of its own, adapted for pipe connection, for example. The valve, if so desired, in a simple manner may also be supplemented with adjustment facilities to maintain an eligible differential pressure.

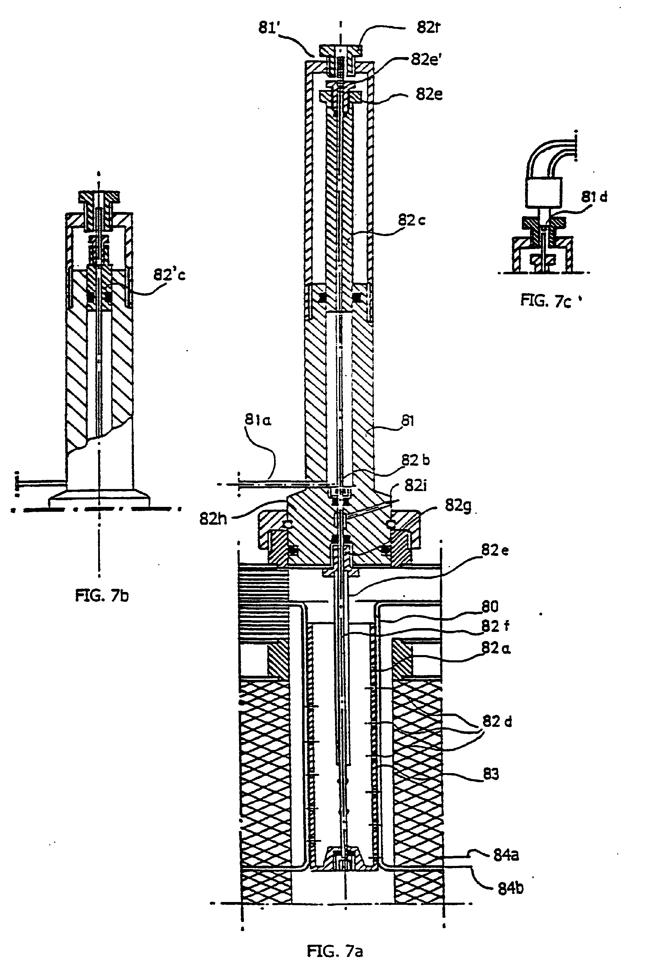

It is a fact that, at least for small houses, the capacity requirement for domestic hot water is essentially the same for most of the buildings. This condition creates both a need and an opening for a simple, easily produced and thus cheap hot water regulator. The equipment available commercially are either both unnecessarily large and expensive or lack any essential function. Therefore they must be supplemented with additional equipment since in these smaller assemblies there prevails a predictable thermal process for hot water preparation. In a heat transferring device according to the present invention, on this basis, it is preferable to use a regulator comprising at least one flow transducer and a valve controlled by the flow transducer, which is integral with the intelligent connection block and arranged to control the primary fluids, the district heating water flow, through the heat exchanger. The regulator is based on a flow transducer, which is illustrated in Figures 7a-7c and preferably arranged to sense the flow in the secondary circuit, whose fluid, the domestic hot water, is to be tempered by the primary fluid in the heat exchanger.

In Figures 7a-7c a flow transducer is illustrated and in Figure 8 a valve is illustrated, these components as well as the compensating units, which are illustrated in Figures 9a-9c and the alternative valve in Figure 10 are integrated with the intelligent connection block's inner cavities and channels, but they may, obviously, also be arranged in their own adapted valve housings, which then, according to the present invention are directly associated and functionally integrated with the intelligent connection block. Obviously the illustrated components, in other applications or similar applications, may be used and installed in their own valve housings, which are adapted to the specific channel or pipe system. The variations of the components suitable to be included in such a regulator which is illustrated in Figures 7a-7c, 8, 9-9c and 10 are intended to be used to control a heat exchanging process for hot water preparation and may be designed and combined in several different variations, depending upon the external conditions they must meet with, but where the common "denominator" is always the flow transducer according to Figures 7a-7c having a main cylinder, a moveable piston and a measuring piston in the main cylinder. The flow transducer may, on production, be given a desired characteristic for its use and for interplay with the adjustment means it coordinates with. In its simplest form the regulator comprises a flow transducer combined with only one valve.

The flow transducer illustrated in Figures 7a-7c comprises a measuring piston 82a, which by means of a preferably weak spindle 82b is associated with a hydraulic main cylinder 81 and an axially moveable hydraulic piston 82c in the main cylinder. The measuring piston 82a, according to the embodiments illustrated in Figure 7a, is arranged having good fit, but not completely without clearance, in a flow channel 80a, for example the inlet pipe and also the transducer slider tube 80 for the cold water to a water heater. The measuring cylinder 82a comprises along its casing holes 82d or slots, through which the measuring piston 82a supplies to an expected flow and flow changes and type of fluid and with regard to optional co-ordinating equipment adapted hydraulic properties. The moveable piston 82c in the main cylinder 81, may, dependent upon the formation of the sealing of the piston, as illustrated in Figure 7a, be provided with a long extension in axial direction or as in Figure 7b, a shorter one.

The measuring piston 82a has, in order to make the device, as far as possible, impervious to the domestic water's static pressure, has either a spindle arrangement to outbalance the pressure or in relation to the active piston-transversal-area a proportionally very weak spindle 82b, which joins the piston to the main cylinder's hydraulic piston 82c positioned outside the bushing. When a flow starts or changes, the measuring piston 82a is forced by the differential pressure which arises in the cold water above the measuring piston balanced by the opposing force which is described further in the following, to move in the slider tube. On increased flow towards the open end of the pipe, such as in the water heater and at reduced flow in counter direction. This is achieved by the measuring piston 82a striving by means of holes 82d to keep an area of holes open which correspond to the flow for through flow of the water, or that a corresponding opening area is provided by means of slots. The pressure loss in the cold water which occurs in the piston 82a will vary with the piston's 82a opening degree in a predetermined ratio to the opposing force which above the valves working range is created by springs of the slave cylinder or in a detached flow transducer by means of built in spring arrangement. The pressure fall is selected in as low a range as possible, for example about 0,2 bar and preferably near constant, at the same time as, via the piston's active transversal area, it can be converted to a sufficient adjusting force for the piston of the main cylinder to not cause too large pressure fall in the hot water and thus difficult to manage pressure differences between hot and cold domestic water in the tapwater system.

The measuring piston, which when the flow changes moves axially in the channel or slider tube, is itself comprised of holes and/or slots, a gap between the slider tube and measuring piston and a specific minimum distance between the lower/upper arranged holes/slots in the measuring piston and the slider tube's lower edge when the measuring piston unloaded.

Said configuration of the flow transducer allows a large measuring range or working register in three well defined and "separate stages" from zero to maximum flow; in the first step the piston is pushed in the pipe from a starting point, zero flow position to the lowest real minimum flow it is intended for, whereby liquid can just directly start to run out through the holes or the slots, representing a displacement of hole 84a up to the edge 84b. At this stage the liquid only passes through the gap between piston and slider tube. Concurrent with the displacement of the piston, the flow is allowed to gradually increase in that the length of the clearance is shortened and the relative pressure fall thereby is reduced. This means safeguarding that at the lowest flows the meter does not fluctuate between no-flow and minimum-flow. In step two the piston is displaced further in the slider tube from the beginning of the holes or slots to their end. This is the transducer's real measuring range and is adapted for the main working range. In step three the piston is displaced yet further in the slider tube past the holes or slot openings end, whereon the pressure fall in the transducer gradually increases.

To eliminate the risk of debris and particles in the water depositing on the spindle 82b and thereby risk of function hindrances, the spindle 82b in its entire active length in the water is surrounded by a pipe 82e with a small gap 82f near the spindle 82b. In this manner the water is not changed round the spindle. The main cylinder 81 may be formed in two ways, which is shown in Figures 7a-7b, either with cylinder 81 or piston 82c,82'c, as worked sealing area against the sealing O-ring. The hydraulic piston's 82c, 82'c top 82e is shaped so that it simultaneously hold the function 82e for insertion of the spindle 82b and the function for adjusting the working range of the flow measuring piston 82a. The top 81' of the main cylinder 81 is shaped so that it contains the function 82f for adjusting a required movement stop for the hydraulic piston 82c. The top 81b", 82f of the main cylinder 81 may, such as is illustrated in Figure 7c, be formed and supplemented so that it contains an electric shutter/ switch function 81d for starting and stopping, for example, a circulation pump. The protection tube 8e for the spindle 82b is fixed in a screw 82g, which is threaded in the sensor device's bushings 82h. The end of the screw 82g is shaped as seating for the O-ring sealing in the bushings 82h of the spindle. The spindle sealing of the hydraulic cylinder has been arranged in a corresponding manner. The gap between the O-ring seals is designed as a pressure release with leakage indicating channel 82i. The flow transducer is in this case, as with other components in described embodiments, may be arranged, fixed in a circlip on the cylinder casing via a cover screw having 8-sided keygrip to a threaded attachment soldered to the channel block over the cold water inlet to the heat exchanger. The valve is sealed against the inner casings of the attachments via an O-ring seal.

The illustrated flow transducer in Figures 7a-7c, is primarily intended to be used in co-operation with a slave cylinder, not shown, which may be included in a adjustment means such as valves of the type illustrated in Figures 8 and 10, whereby the flow transducer's main cylinder 81, via a preferably weak hydraulic pipe 10 transfers oil to a slave cylinder, not shown in Figures 7a-c, which is comprised in an adjustment means illustrated in Figures 8 and 10. On fluctuation of the flow in channel 80a, the movement generated by the flow transducer's measuring piston 82a of the main cylinder's piston 82c and with it the forced out/drawn in oil, out and in, respectively, forces the main cylinder 81 via the hydraulic pipe 81a, to change the position of a slave piston arranged in the slave cylinder, not shown in Figures 7a-c, such as, for example in a movement ratio of the main cylinder piston 82c of 1:10.

According to one embodiment of the present invention a controlled valve according to the embodiment illustrated in Figure 8 may be arranged with the flow transducer. It is preferable, that in a device for the production of domestic hit water in a heat transferring device which is supplied by cold water and hot water from an external source, such as a district heating network, to arrange the control valve to manipulate the district heating water or other equivalent hot water flow through the heat exchanger on the basis of a flow estimate of domestic hot water, whereby the control valve preferably is based on a flow transducer according to any of the variations illustrated in Figures 7a-7c in combination with a control valve according to the embodiment illustrated in Figure 8 and when required supplemented with compensating means according to Figures 9a-9c, alternatively a valve according to Figure 10. The flow transducer is thereby preferably arranged to sense the in-flow of cold water in the domestic hot water circuit. In Figures 8a-8c an alternative compensating unit is illustrated, to be arranged associated with the controlled valve and the flow transducer illustrated in Figure 7, such as illustrated in Figures 7a-c. The compensating unit illustrated in Figure 9a may also be associated with the valve and a flow transducer illustrated in Figure 10 according to any of the illustrated variations in Figures 7a-c. The compensating units illustrated are integrally arranged in an intelligent connection block arranged for a heat exchanger having inner cavities and channels, but obviously may also be arranged in their own adapted valve housings, for example, designed to connect to a conventional pipe system. Obviously, a valve according to Figures 8 or 10 and a flow transducer according to Figure 7a to 7c can be used for other applications and be installed in their own valve housings, which are adapted to the actual channels or pipe system. The embodiments of the control valve illustrated in the figures, are envisaged to be used to control a heat exchange process for hot water preparation and may be designed and combined in several different variants depending upon the external conditions they must work under.

The flow transducer may on production be given the desired properties for its use and in co-operation with the controlled valve regulate outgoing flow of the district heating return based on the readings of the inflow of cold water in the domestic hot water circuit. In its simplest form the control valve comprises a flow transducer according to Figures 7a-c and a flow transducer controlled valve, a suitable embodiment of which is illustrated in Figure 7, where the flow transducer's main cylinder 81 is associated with a simple slave cylinder 85. This will work well under the condition that the following values and criteria are fulfilled:
- the temperature of the incoming cold water is relatively constant, which in practice it is also normally, approx. 10°C
- the temperature of outgoing hot water shall be maintained at a predetermined range, for example at 50° C, and a selected temperature not fluctuating too much from this
- the temperature of incoming district heating water is relatively constant over time, for example, 65° C
- the differential pressure for the district heating water is relatively constant over time, for example, 0.1 MPa
- the district heating server contains a limited amount of water
- The distribution pipe (plumbing) is always kept warm

The control valve with the slave cylinder 85 is according to the illustrated embodiment in Figure 8, connected to the flow transducer's main cylinder 81, shown in Figures 7a-c, via a hydraulic pipe 81a and the slave cylinder's 85 spring loaded piston 86a is fixed to the spindle 86b of the controlled valve. On drawing-off, the generated movement of the measuring piston 82a with the piston 82c of the main cylinder, and with that the forced out oil of the main cylinder 81 via the hydraulic pipe 81a is brought to lift the slave piston 86a and therewith the valve disk 86c from its seating 87a for allowing flow of district heating water, for example, in a movement ratio of 1:10 relative the main cylinder piston 81. When drawing-off is reduced or stops, the spring force brings the slave piston 86a, in part to close the valve disk 86c, in part to transfer oil back to the main cylinder 81, which in its turn makes its piston 82c and the measuring piston 82a of the flow transducer to reduce their output and completely return to starting point if the drawing off stops. A specific lowest amount of oil of atmospheric pressure remains in the slave cylinder 85 when the valve disk 86c is completely closed. The cover 85a of the valve with pressure chamber 85b is threaded into the slave cylinder 85 and locked with locking screws. The upper casing part of the slave cylinder 85 is slit with 2-4 recesses for the adjustable spring holding arrangement required to, partly compensate for tolerances for the springs, and partly to somewhat change and adjust desired hot water temperature. The end cover of the valve 85d is threaded on the casing of the slave cylinder and at the same time constitutes counterbalance to the spring holding arrangement and handle for adjusting the spring force and thereby also the hot water temperature. The spring loaded piston 86a comprises a seating for the inner spring and has an extended neck to enable assembly. The piston neck is joined to the spindle via 2-4 slotted screws. The insertion of the bushing is provided with double O-ring seals having intermediate pressure release and drainage channel.

The valve seat 87a is connected via fastening means 87b to the valve housing or bushing, preferably joined to disassemble, for example via threads 87c. The fastening means 87b, may for example be shaped like a pipe in which the spindle 86m can move in, and with the valve seat attached to the end of the pipe. The pipe is further arranged with openings to allow flow there through. The valve seat 87a is further lowered into the channel block's outlet pipe 87 for district heating water from the water heater and is sealed against the pipe with an O-ring seal. This design provides a greatly simplified production and assembly method compared to conventional methods, because no machining requiring high tolerances is required to achieve a valve seat with a good fit with the spindle. Because the valve seat is included as an integral part of the valve, there is always a good fit and because the O-ring sealing in co-operation with the fixing of the bushing the tolerances in the channel in which the valve seat is positioned do not need to be so high.

The slave valve is in this case, as for previously described embodiments of components, fixed in a circlip on the casing of the cylinder via a union nut having 8 sided keyhole to a soldered threaded attachment in the channel block over the district heating outlet from the heat exchanger. The valve is sealed against the inner casing of the attachment via an O-ring seal.

The slave valve, to make the valve insensitive to the static pressure of the district heating water, preferably has a pressure released disk and so as to i. a. bring down the dimensions, a special spring arrangement, which despite a short axial space, can have a low spring constant. The pressure release is achieved by means of a channel arranged in the station of the spindle, which joins the flow channel with a pressure chamber 85b arranged at the other end of the spindle, whereby the spindle at said other end is arranged with a piston which lies in a seal via an O-ring against the inner surfaces of the pressure chamber. This piston has essentially the same transversal area as the disk in the seating cavity against the exposed active area of static pressure. The valve is hereby outbalanced and essentially insensitive to the static pressure in the flow channel. The end cover 85d of the valve is at the same time a handle for adjusting the spring force. The hydraulic oil circuit is at zero flow position always completely without pressure/atmospheric pressure. The valve consists of at least one domestic hot water flow indicating flow transducer piston 82a, positioned in the inlet pipe 82a for the cold water to the water heater, joined via a weak spindle 82f having a weak main hydraulic cylinder 81 with piston 82c, wherein a large movement with little force is converted to sufficiently great pressure to overcome a spring force in at least one slave cylinder 85 with piston 86a which in its turn influences a valve disk 86c in the district heating pipe 87 from the water heater to open and close or stand still continuously in proportion to the need of district heating water flow to provide the required temperature to the domestic hot water. Preferably the valve has a pressure released disk 86c, and a spring arrangement 86d with especially low spring constant in a locked spring housing. The valve's end cover constitutes a handle for adjusting the spring force in said arrangement 86d and thereby the domestic hot water temperature.

In plants where the temperature and/or differential pressure of the district heating water over time has moderate variations upwards, but where, for example the above mentioned values are no more than for short periods, or marginally below, but the above criteria is otherwise valid, the flow transducer and control valve is supplemented with a compensating unit of the type illustrated in Figure 9a. The compensating unit illustrated in Figure 9a comprises a compensating cylinder 88a, a self-acting sensor body 89a, for the temperature in the heat exchanger's outlet for hot water, joined with a spring loaded hydraulic piston 89b in the compensating cylinder 88a, which in its turn is hydraulically joined to the slave cylinder 85 for the control valve, which is illustrated in Figure 7, by means of hydraulic conduit 88b. By means of said compensation which does not form part of the invention excess temperatures may be essentially avoided by the cylinder 88a of the compensating unit drawing up necessary amounts of oil from the slave cylinder 85 so that the district heating valve reduces its opening degree and its flow of district heating hot water, in order to avoid danger of excess temperatures of the hot water, so-called scalding guard. The compensating cylinder in Figure 9a, which is arranged to sense the temperature of the outgoing domestic hot water from the heat exchanger, is connected to the slave cylinder 85, via a thin hydraulic conduit 88b. The spring loaded hydraulic piston 89b of the compensating cylinder is fixed to a spindle 89f, which is influenced by a thermal sensor body in, for example the space for the outlet 89g for domestic hot water from the water heater's heat transmitting channel element. The temperature range of the sensor body 89a, stroke and necessary spring force may be selected in relation to the desired temperature compensating ability and working range for the compensating cylinder 88a. At the same time this will be a dimensioning factor for the choice of cylinder diameter and spring 89e. The compensating unit's hydraulic piston 89b on its upper side has been formed as seating 89h and guide for the piston spring 89e and on its under side designed with a shoulder 89d as movement stop downwards. Bushing 89i is provided with double O-ring seals 89j,89k, for spindle insertion, with intermediate pressure release and a draining channel 891, which also acts as leakage indicating channel. The holder for the sensor body is shaped in the form of an O-ring sealed pipe 89m lying outside the spindle against the sensor body 89a and the bushing 89i. The pipe 89m is threaded into the bushing 89i via a thread join 89n adjustable during production. The sensor body 89a is fixed to the pipe 89m via notched pins or circlips 890. The cylinder 88a has at its top a threaded cover 89p with a 6-sided keyhole. The cover at the same time comprises upper seating and control for the piston spring 89e. The compensating cylinder is in this embodiment, as in the previously described components, fixed in a circlip on the cylinder casing via a cover nut with 8-sided key grip to a soldered threaded attachment 89q in the channel block over the hot water outlet from the heat exchanger. The valve is sealed against the inner casing of the attachment via an O-ring seal

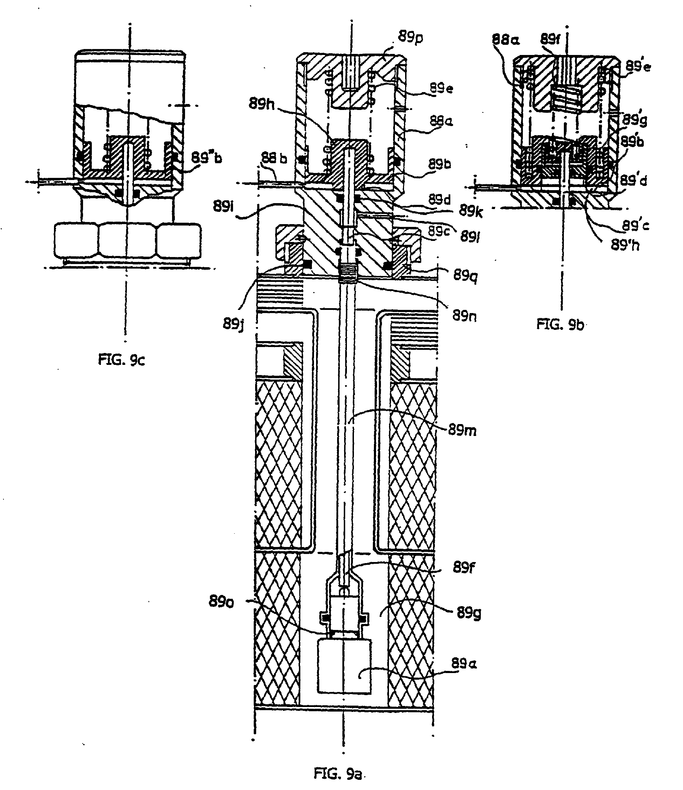

In a heat transferring device connected to a system according to the present description having relative stable inlet temperature and a stable differential pressure but which has a district heat server, which contains a larger amount of water and/or a distribution pipe which is not kept warm by through circulation, it is desirable to supplement the control valve with a compensating unit for maintaining heat so as to avoid the district heating water to periodically go cold. Such maintenance of heat is obtained indirectly with a control valve associated with a compensating unit according to Figure 9a, but which is provided with a cylinder part according to Figure 9b or 9c. The compensating units for maintaining heat, which are illustrated in Figure 9b and 9c, comprise a temperature sensor body of the same type and construction as the one illustrated in Figure 9a, therefor only compensating cylinders and the components associated therewith are illustrated in Figure 9b and 9c. The compensating unit in Figure 9b illustrates a compensating cylinder 88a and a compensating piston 89'b arranged in the compensating cylinder. Compensating piston 89'b is provided with an inner "heat maintaining piston" 89'd, which is influenced, at a certain distance to the heat maintaining piston 89'd on the spindle for the temperature sensor body, by a mounted spring loaded sleeve 89'g, which when the temperature of the sensor body has dropped to a level predetermined on production of the compensating piston 89'b, for example 40° C, the heat maintaining piston 89'd is made to press oil from the compensating cylinder 88a to the slave cylinder 85, illustrated in Figure 8, for the control valve which then opens the valve for the district heating water which may transfer heat via the heat exchanger to the hot water. In reverse the heat maintaining piston 89'd closes the district heating valve when the temperature of the sensor body had reached a determined level. The process is developed subsequently to a conventional regulating process around the sensor body for maintaining constant temperature, all this so as no unnecessary long wait for hot domestic water occurs when drawing off starts. The compensating cylinder according to Figure 9b, in principle has the same effect so as to avoid a too high temperature of the hot water as that described with reference to Figure 9a. At too high a temperature of the sensor body, for example a temperature over 50° C, the compensating piston 89'b is lifted by the spindle and the casing 89'b, which when inactive rests on support heels 89'h so that the cylinder 88a of the unit draws the necessary amount of oil from the valve's slave cylinder 85, as according to Figure 8.

In principle a similar but simpler and probably cheaper heat maintaining function for use where the heat maintaining temperature is acceptable, or is desired, to be at the same temperature level as the hot water normally is kept, for example, 50° C, is obtained with the illustrated compensating unit in Figure 9c. There the compensating piston 89"b does not show any movement stop downwards so that, in itself, it may directly influence the slave cylinder 85 for maintaining heat. In such an embodiment it follows that the compensating cylinder according to Figure 9c also, to a certain extent, can compensate the temperature of the hot water at low temperatures of the incoming district heating water more than that which the valve has been dimensioned for, for example lower than the above mentioned 65° C. In reverse, obviously, also for low differential pressure or both of these deviations when occurring simultaneously.

If there are reasons for maintaining heat but an indirect heat maintaining function for the district heating server over the domestic hot water in the heat exchanger is not acceptable and/or where a compensating function for lower district heating temperatures is desired and likewise where a compensating function for higher and larger variations of temperatures of incoming district heating water are desired, the slave cylinder can be designed with built-in compensation for a deviant district heating temperature and which, simultaneously, contains a directly acting heat maintaining function for the district heating server, which is shown by the illustrated valve in Figure 10, with an integral compensating unit, via a mounted self-acting thermal sensor body 91 mounted in the district heating inlet, which by means of a hydraulic transferring device 91a, 91b, 92b transfers its position to its own slave piston 92a mounted at the top of the slave cylinder 92c, which in turn effects a device for adapting the district heating valve's lifting height at all the drawing-off flows in relation to what is necessary for the correct hot water temperature, on the basis of the actual temperature of the incoming district heating water, which during drawing-off may vary substantially, for example from 60° C to 120° C without the hot water temperature being changed and which, as with heat maintaining, is kept at 40° C, for example.

A valve according to Figure 10 could, of course, also be supplemented with a corresponding differential pressure sensor against the temperature sensor for compensation also for varying differential pressure in the district heating network.

The control valve with the temperature compensating slave cylinder 92c, according to the illustrated embodiment in Figure 10, which is partly arranged to compensate the valve's lifting height on the basis of varying temperature of incoming district heating water, and partly provide a heat maintaining function, is joined to the described main cylinder 81, illustrated in Figures 7a-c via a thin hydraulic conduit 81a and the slave cylinder's spring loaded hydraulic piston 93a is fixed in the valve spindle 92d via an arm linkage system 92e, which comprises at least 2 oppositely assembled arm link pairs. The outer pivoting points 92f of the arm linkage system 92e run in the guide rails 92g. The inclination of the longitudinal axis of the guide rails 92g in relation to the longitudinal axis of the spindle is variable and may be influenced by a device, for example, which in its turn, for example, can be influenced of a thermal sensor body 91 for temperature, the district heating water's inlet temperature, for example. The geometry for, in part, the arm linkage system 92e, in part, the guide rails 92g, in part the device for the inclination of the guide rails, may be selected so that the desired properties for the movement of the spindle in relation to the hydraulic piston 93a is obtained in such a manner that the movement may be both weakened or strengthened or varied along the movement. Suspension of the guide rials 92g and the device for the guide rails inclination is, furthermore, arranged so that the device for the inclination of the guide rails may bring the guide rails 92g, without signal of flow to the slave hydraulic piston 92c from the flow transducer piston and main cylinder 81, to lift the spindle 92d and its disk 93c for letting out district heating water for maintaining the heat. On drawing-off, the generated movement of the illustrated measuring piston 82a in Figures 7a-c in the main cylinder's piston 82c, and therefore the forced out oil from the main cylinder 81 via transport through the connected hydraulic pipe 81a between the cylinders 81, 92c, causes the slave piston 93a to lift, for example in a ratio of 1:10 in relation to the main cylinder piston's 82c movement. The slave piston's 93a movement is transferred via the arm link system 92e to the spindle 92d, depending upon the inclination of the guide rails 92g, for example, depending upon the inlet temperature of the district heating water, so that the appropriate opening degree is attained between the valve disk 93c and the seating 95a for letting through the district heating water to enable the desired domestic hot water temperature is obtained out of the water heater. When the drawing-off is reduced or stops the spring force from the spring arrangement 92b makes the slave piston 93a via the arm linkage system 92e to partly close the valve disk 93c, partly to lead back the oil to the main cylinder 81 which in its turn causes its piston 82c and the sensor piston 83 to reduce its discharge or completely return to the starting point if the drawing-off stops. A specific lowest amount of oil of atmospheric pressure remains in the slave cylinder 92c when the valve disk 93c is completely closed. The valve has pressure loaded disk 93c, and special spring arrangement 92h, similar to that already disclosed for the general case, according to Figure 8.

The cover 92i with the pressure chamber 96b is, at its upper part, shaped as a guide for the device for the guide-rails inclination and their springs 94b, 94g. The cover 92i with the pressure chamber 96b is at its lower part, slotted with at least 2 opposing recesses, not shown, which house the arrangement for the arm linkage system 92e, guide-rails 92g and the device for the inclination of the guide-rails and is, via threaded joints, joined to an intermediate piece 94d, which in its turn, via threaded joints is threaded down over the slave cylinder 92c and where both parts are locked with locking screws. The pivoting point 92f in the guide-rail 92g of the arm linkage system 92e is provided with rollers mounted in bearings, which with a good fit run in the guide-rail path. The guide-rails 92g at their lower areas via an inclining groove 92i along the guide rail's longitudinal axis, are suspended in a shaft in the slotted lower part of the lock 92i. The guide-rails 92g at their upper area, which runs in the device for the inclination of the guide-rails, are shaped as forks whose ends 92ga are provided with a shaft having a heavier pair of rollers mounted in bearings and a weaker roller mounted on the same shaft. The weaker roller runs against an upper spring loaded path 94f with a central part 94e shaped like a cylinder having at least 2 opposing pieces to extending wings of the paths, which has been given an incline which continually strives to bring the end of the guide track 92ga outwards. The heavier rollers run against a lower path 94h with a central part 94c shaped like a cylinder with the same number of extending wings to corresponding paths, which may be moved in a vertical direction, for example, controlled by a temperature, and which strives to bring the end of the guide-rail 92a inwards. If the path 94h is controlled by a temperature in, for example, the district heating water's inlet, then, for example, at rising temperatures, the path of the piston 92a can move downwards and in the reverse at falling temperature the path of the spring 94g is moved upwards. The cylindrical central part 94c is, at its upper end, via a threaded join, connected to a spring loaded transition piece 96d, which in its turn is brought up into the cover 92i. The transition piece 96d receives and transfers, for example, the controlled movement of a temperature from piston 92a. The lower path 94h may also, for example, controlled by a temperature, after it on falling temperature has brought the rollers and the end of the guide-rail to its innermost position, at continued temperature drop, lift the guide-rail, which then at its lower linkage runs in its path 92j against the linkage axle and forces the arm linkages 92e in the outer path of the guide rails 92f, whereby the spindle 92d, after the slave piston 93a is brought downwards and has pressed out as much oil to the main cylinder 81 that the piston 82c of the main cylinder has reached its upper stop, is lifted and the valve disk 93c opens for letting through the district heating water. The casing part of the slave cylinder 92c is slotted with at least 2 opposing recesses for the adjustable spring holding arrangement which is necessary to, on one hand, compensate for tolerances for the springs and on the other hand, to some extent change and adjust to the desired hot water temperature. The end cover of the valve 97 is shaped as outer support for the device 94h for the inclination of the guide rails and at its top end provided with a slotted fixed and adjustable nut 92m, for slave cylinder 92b of the thermal sensor body, for example. The end cover 97 via a threaded join is fixed to the cover's 92i lower area and locked with locking screws to it. A turning ring for adjusting the spring force and thereby also the hot water temperature is threaded on the casing of the slave cylinder 92c and constitutes at the same time abutment for the spring holding arrangement. The piston 93a constitutes seating for the inner spring and has for the requirement of assembling together, an extending neck 93aa. The neck 93aa of the piston is joined to the spindle 92d via at least 2 opposing arm link systems 92e, which are fixed to attachments movable in grooves on the neck of the piston 93aa and the spindle 92d. The spindle passage of the bushing 92n is provided with double O-ring seals having intermediate pressure release and draining channel 92p which also constitute leakage indicating channel. The valve seating 95a via a threaded join 92o is joined to the bushing 92n and lowered into the channel block's outlet pipe for district heating water from the water heater and sealed against the outlet pipe with an O-ring seal. The valve is in this embodiment fixed in a circlip 92q on the cylinder casing via a cover nut 92r with an 8 sided key grip to a soldered attachment in the channel block over the district heating outlet from the heat exchanger. The valve is sealed against the inner casing of the attachment via an O-ring seal. In Figure 9, the sensor body 91 for temperature, may for example, be a temperature sensor having a thin pipe 91b for hydraulic transfer of the supply temperature of the district heating water, and then positioned, for example, in a sensor pocket in the screw cap for the district heating filter. The sensor pocket at its end is formed as a key hole for a 6-sided key and in its subsequent part with a dimension and tolerance which gives a good fit and thus good position against the casing of the sensor body. The need for a good fit need not be exaggerated since the variation of the temperature over time will be very slow. The slave cylinder according to Figure 10 may, of course, be supplemented and associated with a so called scalding guard, preferably in an embodiment according to Figure 9a. The connection takes place in such a case via the illustrated hydraulic pipe 88b in Figure 10.

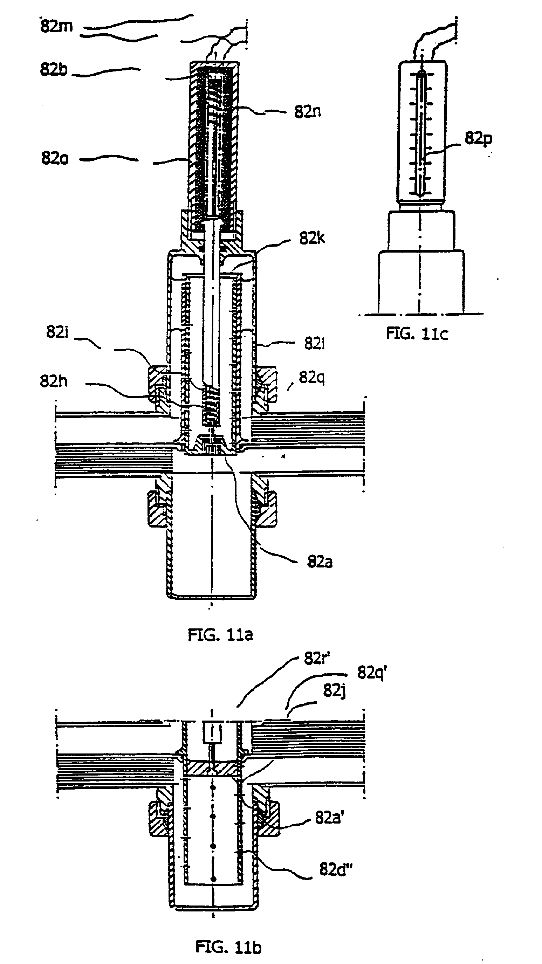

The flow transducer illustrated in Figures 11a-11c is especially suitable to integrally be included in an intelligent connection block in a heat transferring device according to the invention as a flow transducer, for example, measuring energy. The flow transducer comprises measuring cylinder 82a, 82a' with its own built-in opposing force, which is achieved by means of the measuring cylinder 82a, such as illustrated in Figure 11, being associated with a spring arrangement 82h, 82i. This opposing force maintains desired differential pressure over the measuring cylinder 82a via a suitable and adapted spring assembly where the spring constant is reflected in the character of the holes/slots 82d placing over the measuring cylinder's 82a casing, alternatively the slider tube's 82j casing. The spring 82h may, as illustrated in Figure 11a be accommodated exceptionally long for the lowest possible spring constant in the fluid space and thus needs no spindle sealing and thereby no real bushing. A constant spring may also be selected, which may be arranged in or outside the fluid space, to apply opposing force on the measuring cylinder 82a, 82a'. This gives a simplified spreadout of the holed-surface since the typical appearance is linear. The flow transducer according to Figure 6d is arranged integral in an intelligent connection block and comprises also a slider tube 82k, surrounded by an outer channel 821, a dip tube, in which flows the fluid to the flow transducer, whereby the fluid through the dip tube 821 is lead to and into the slider tube 82k where the measuring cylinder is arranged. Alternatively, the measuring cylinder is given a simpler design 82a', such as is illustrated in Figure 11b, where the measuring cylinder 82a' is arranged to run in a slider tube 82j whereby the slider tube 82j has holes 82d" along its casing or slots whereby the assembled slider tube 82j and the measuring cylinder 82a' provides the equipment it is to co-ordinate with a hydraulic property adapted to the expected flow and flow fluctuation, and the nature of the fluid. In applications where the flow transducer is used for measuring as a part of an energy reading, it is necessary that it generates an outgoing signal, which is mainly proportional to the sensed flow. An appropriate signal is thus received from the measuring cylinder 82a, 82a' by means of inductive measuring of the position of the top 82b of the spindle, whereby an electric signal is generated in the cables 82m. This may be achieved by means of an integral resolver 82n at the upper part of the sensor cylinder, having etched pattern, necessary slide and scale. If the pattern is etched in a transparent material such as glass and the upper part is provided with a window 82p and an exterior analogue scale, cf. Figure 11c, the instantaneous flow may, in addition, be read visually by the position of the top 82 of the spindle in relation to the analogue scale.

The function and essential properties of the flow transducer according to Figures 11a-c have been disclosed in the foregoing whereby as to make clearer, the sensor's first registering stage corresponds a displacement of hole 82q in Figure 11a from its resting position, zero flow, to the lower bottom edge 82r of the slider tube 82k, and in a corresponding way in Figure 11b, the displacement of the upper edge 82r' of the piston 82a in relation to the slider tube's first opening hole.

The characteristic of the flow transducer very nearly may be classified as a so-called orifice plate which continually changes and adapts its measuring range to the flow load and thereby avoids the drawbacks of the orifice plate and which works with a constant, or practically constant, pressure fall over its real flow range.

## Claims

1. A method for controlling a heat exchanging process in a heat transferring device comprising a primary fluid circuit and a secondary fluid circuit, **characterized by** the steps of:
sensing a first temperature of the incoming fluid in said primary fluid circuit;
sensing a second temperature of the incoming fluid in said secondary fluid circuit;
sensing the fluid flow in said secondary fluid circuit;
transferring a first control signal representing said first sensed temperature, a second control signal representing said sensed fluid flow, and a third control signal representing said sensed second temperature to a control unit; and
controlling the fluid flow in said primary fluid circuit using said control unit, by utilizing said first control signal, said second control signal, and said third control signal and, without utilizing the temperature of the outgoing fluid from said secondary circuit, so that a proportionally correct flow ratio between the outgoing fluid flow of said secondary fluid circuit and the ingoing fluid flow of said primary fluid circuit is obtained with respect to a temperature requirement of said outgoing fluid.

2. The method according to claim 1, wherein the step of controlling comprises the step of controlling the fluid flow in said primary fluid circuit using said control unit in order to obtain a continuous proportionally correct flow ratio in such way that the temperature of said outgoing fluid is maintained at a substantially constant level defined by said temperature requirements.

3. The method according to any of the preceding claims, wherein said method further comprises the steps of:
sensing a differential pressure of said primary fluid circuit;
transferring a fourth control signal representing said sensed differential pressure to said control unit; and
compensating the control of the fluid flow in said primary fluid circuit by means of said control unit for variations of said fourth control signal so that the temperature of the outgoing fluid is maintained at said constant level.

4. The method according to claim 3, wherein the step of sensing the differential pressure comprises the step of sensing the differential pressure between the incoming fluid at an inlet of said primary fluid circuit and the outgoing fluid at an outlet of said primary fluid circuit.

5. The method according to claim 3 or 4, wherein said step of compensating the control of the fluid flow in said primary fluid circuit by means of said control unit for variations of said fourth control signal comprises the step of regulating said differential pressure.

6. The method according to claim 3, 4, or 5, wherein said step of compensating control of the fluid flow of said primary fluid circuit by means of said control unit for variations in said fourth control signal comprises the step of maintaining said differential pressure at a constant level.

7. A device for controlling a heat exchanging process in a heat transferring device comprising a primary fluid circuit and a secondary fluid circuit, **characterized by**
a control unit;
a first sensor means connected to said control unit and being arranged to sense a first temperature of the incoming fluid in said primary fluid circuit and to transfer a first control signal representing said sensed first temperature to said control unit;
a second sensor means connected to said control unit and being arranged to sense an incoming fluid flow of said secondary fluid circuit and to transfer a second control signal representing said sensed fluid flow to said control unit; and
a third sensor means connected to said control unit and being arranged to sense a second temperature of the incoming fluid in said secondary fluid circuit and to transfer a third control signal representing said sensed second temperature to said control unit
control means connected to said control unit and being arranged to act on said fluid flow in said primary fluid circuit; and
that said control unit is arranged to, by utilizing said control means, as a response of said first control signal, said second control signal, and said third control signal and, without utilizing the temperature of the outgoing fluid from said secondary circuit, control the fluid flow in said primary fluid circuit so that a continuous proportionally correct flow ratio between the outgoing fluid flow of said secondary fluid circuit and the ingoing fluid flow of said primary fluid circuit is obtained with respect to temperature requirements of said outgoing fluid.

8. The device according to claim 7, wherein said control unit is arranged to, by utilizing said control means, control the fluid flow in said primary fluid circuit in order to obtain a continuous proportionally correct flow ratio in such way that the temperature of said outgoing fluid is maintained at a substantially constant level defined by said temperature requirements.

9. The device according to any of the claims 7 or 8, wherein said device further comprises a fourth sensor means connected to said control unit and being arranged to sense the differential pressure of the primary fluid circuit and to transfer a fourth control signal representing said differential pressure to said control unit; and wherein said control unit is arranged to, by utilizing said compensating means, as a response of said fourth control signal compensate the control of the fluid flow in said primary fluid circuit for variations of said fourth control signal so that the temperature of the outgoing fluid of said secondary fluid circuit is maintained at said constant level.

10. The device according to claim 9, wherein said fourth sensor means are arranged to sense the differential pressure between the incoming fluid at an inlet of said primary fluid circuit and the outgoing fluid at an outlet of said primary fluid circuit.

11. The device according to claim 7 or 8, wherein said compensating means are arranged to regulate said differential pressure.

12. The device according to claim 9, 10, or 11, wherein said compensating means are arranged to maintain said differential pressure at a constant level.

## Patentansprüche

1. Verfahren zum Steuern eines Wärmeaustauschprozesses in einer Wärmeübertragungsvorrichtung mit einer primären Fluidschaltung und einer sekundären Fluidschaltung,
**gekennzeichnet durch** die Schritte:
Erfassen einer ersten Temperatur des zufließenden Fluids in der primären Fluidschaltung;
Erfassen einer zweiten Temperatur des zufließenden Fluids in der sekundären Fluidschaltung;
Erfassen des Fluiddurchflusses in der sekundären Fluidschaltung;
Übertragen eines die erfasste erste Temperatur anzeigenden ersten Steuersignals, eines den erfassten Fluiddurchfluss anzeigenden zweiten Steuersignals und eines die erfasste zweite Temperatur anzeigenden dritten Steuersignals an eine Steuereinheit; und
Steuern des Fluiddurchflusses in der primären Fluidschaltung **durch** die Steuereinheit unter Verwendung des ersten Steuersingnals, des zweiten Steuersignals und des dritten Steuersignals und ohne Verwendung der Temperatur des abfließenden Fluids von der sekundären Fluidschaltung, so dass ein proportional korrektes Durchflussverhältnis zwischen dem Durchfluss des abfließenden Fluids von der sekundären Fluidschaltung und dem Durchfluss des zufließenden Fluids der primären Fluidschaltung bezüglich einer Temperaturanforderung für das abfließende Fluid erhalten wird.

2. Verfahren nach Anspruch 1, wobei der Schritt zum Steuern einen Schritt zum Steuern des Fluiddurchflusses in der primären Fluidschaltung unter Verwendung der Steuereinheit aufweist, um ein kontinuierlich proportional korrektes Durchflussverhältnis derart zu erhalten, dass die Temperatur des abfließenden Fluids auf einem im Wesentlichen konstanten Pegel gehalten wird, der durch die Temperaturanforderungen definiert ist.

3. Verfahren nach einem der vorangehenden Ansprüche, wobei das Verfahren ferner die Schritte aufweist:
Erfassen eines Differenzdrucks in der primären Fluidschaltung;
Übertragen eines den erfassten Differenzdruck anzeigenden vierten Steuersignals an die Steuereinheit; und
Kompensieren der Steuerung des Fluiddurchflusses in der primären Fluidschaltung durch die Steuereinheit hinsichtlich Änderungen des vierten Steuersignals, so dass die Temperatur des abfließenden Fluids auf dem konstanten Pegel gehalten wird.

4. Verfahren nach Anspruch 3, wobei der Schritt zum Erfassen des Differenzdrucks einen Schritt zum Erfassen des Differenzdrucks zwischen dem zufließenden Fluid an einem Einlass der primären Fluidschaltung und dem abfließenden Fluid an einem Auslass der primären Fluidschaltung aufweist.

5. Verfahren nach Anspruch 3 oder 4, wobei der Schritt zum Kompensieren der Steuerung des Fluiddurchflusses in der primären Fluidschaltung durch die Steuereinheit hinsichtlich Änderungen des vierten Steuersignals den Schritt zum Regeln des Differenzdrucks aufweist.

6. Verfahren nach Anspruch 3, 4 oder 5, wobei der Schritt zum Kompensieren der Steuerung des Fluiddurchflusses in der primären Fluidschaltung durch die Steuereinheit hinsichtlich Änderungen des vierten Steuersignals den Schritt zum Halten des Differenzdrucks auf einem konstanten Pegel aufweist.

7. Vorrichtung zum Steuern eines Wärmeaustauschprozesses in einer Wärmeübertragungsvorrichtung mit einer primären Fluidschaltung und einer sekundären Fluidschaltung,
**gekennzeichnet durch**
eine Steuereinheit;
eine mit der Steuereinheit verbundene erste Erfassungseinrichtung, die eingerichtet ist, eine erste Temperatur eines zufließenden Fluids in der primären Fluidschaltung zu erfassen und ein die erfasste erste Temperatur anzeigendes erstes Steuersignal an die Steuereinheit zu übertragen;
eine mit der Steuereinheit verbundene zweite Erfassungseinrichtung, die eingerichtet ist, einen Durchfluss eines zufließenden Fluids der sekundären Fluidschaltung zu erfassen und ein den erfassten Fluiddurchfluss anzeigendes zweites Steuersignal an die Steuereinheit zu übertragen;
eine mit der Steuereinheit verbundene dritte Erfassungseinrichtung, die eingerichtet ist, eine zweite Temperatur des zufließenden Fluids in der sekundären Fluidschaltung zu erfassen und ein die erfasste zweite Temperatur anzeigendes zweites Steuersignal an die Steuereinheit zu übertragen; und
eine mit der Steuereinheit verbundene Steuereinrichtung, die eingerichtet ist, auf den Fluiddurchfluss in der primären Fluidschaltung einzuwirken;
wobei die Steuereinheit eingerichtet ist, unter Verwendung der Steuereinrichtung in Antwort auf das erste Steuersingnals, das zweite Steuersignals und das dritte Steuersignals und ohne Verwendung der Temperatur des abfließenden Fluids von der sekundären Fluidschaltung, den Fluiddurchfluss in der primären Fluidschaltung derart zu steuern, dass ein kontinuierlich proportional korrektes Durchflussverhältnis zwischen dem Durchfluss des abfließenden Fluids der sekundären Fluidschaltung und dem Durchfluss des zufließenden Fluids der primären Fluidschaltung bezüglich Temperaturanforderungen für das abfließende Fluid erhalten wird.

8. Vorrichtung nach Anspruch 7, wobei die Steuereinheit eingerichtet ist, unter Verwendung der Steuereinrichtung den Fluiddurchfluss in der primären Fluidschaltung zu steuern, um ein kontinuierlich proportional korrektes Durchflussverhältnis derart zu erhalten, dass die Temperatur des abfließenden Fluids auf einem im Wesentlichen konstanten Pegel gehalten wird, der durch die Temperaturanforderungen definiert ist.

9. Vorrichtung nach einem der Ansprüche 7 oder 8, wobei
die Vorrichtung ferner eine mit der Steuereinheit verbundene vierte Erfassungseinrichtung aufweist, die eingerichtet ist, den Differenzdruck der ersten Fluidschaltung zu erfassen und ein den Differenzdruck anzeigendes viertes Steuersignal an die Steuereinheit zu übertragen; und
wobei die Steuereinheit eingerichtet ist, unter Verwendung einer Kompensationseinrichtung in Antwort auf das vierte Steuersignal die Steuerung des Fluiddurchflusses in der primären Fluidschaltung hinsichtlich Änderungen des vierten Steuersignals zu korrigieren, so dass die Temperatur des abfließenden Fluids der sekundären Fluidschaltung auf dem konstanten Pegel gehalten wird.

10. Vorrichtung nach Anspruch 9, wobei die vierte Sensoreinrichtung eingerichtet ist, den Differenzdruck zwischen dem zufließenden Fluid an einem Einlass der primären Fluidschaltung und dem abfließenden Fluid an einem Auslass der primären Fluidschaltung zu erfassen.

11. Vorrichtung nach Anspruch 7 oder 8, wobei die Kompensationseinrichtung eingerichtet ist, den Differenzdruck zu regeln.

12. Vorrichtung nach Anspruch 9, 10 oder 11, wobei die Kompensationseinrichtung eingerichtet ist, den Differenzdruck auf einem konstanten Pegel zu halten.

## Revendications

1. Procédé permettant de contrôler un procédé d'échange thermique dans un dispositif de transfert de chaleur comprenant un circuit fluidique primaire et un circuit fluidique secondaire, **caractérisé par** les étapes consistant à :
détecter une première température du fluide entrant dans ledit circuit fluidique primaire ;
détecter une deuxième température du fluide entrant dans ledit circuit fluidique secondaire ;
détecter l'écoulement fluidique dans ledit circuit fluidique secondaire ;
transférer un premier signal de commande représentant ladite première température détectée, un deuxième signal de commande représentant ledit écoulement fluidique détecté, et un troisième signal de commande représentant ladite deuxième température détectée vers une unité de commande ; et
contrôler l'écoulement fluidique dans ledit circuit fluidique primaire à l'aide de ladite unité de commande, en utilisant ledit premier signal de commande, ledit deuxième signal de commande et ledit troisième signal de commande et, sans utiliser la température du fluide sortant provenant dudit circuit secondaire, de telle sorte qu'un rapport d'écoulement proportionnellement correct entre l'écoulement fluidique sortant dudit circuit fluidique secondaire et l'écoulement fluidique entrant dudit circuit fluidique primaire soit obtenu par rapport à une exigence en termes de température dudit fluide sortant.

2. Procédé selon la revendication 1, dans lequel l'étape de contrôle comprend l'étape consistant à contrôler l'écoulement fluidique dans ledit circuit fluidique primaire en utilisant ladite unité de commande afin d'obtenir un rapport d'écoulement proportionnellement correct continu de telle sorte que la température dudit fluide sortant est maintenue à un niveau sensiblement constant défini par lesdites exigences en termes de température.

3. Procédé selon l'une quelconque des revendications précédentes, dans lequel ledit procédé comprend en outre les étapes consistant à :
détecter une pression différentielle dudit circuit fluidique primaire ;
transférer un quatrième signal de commande représentant ladite pression différentielle détectée vers ladite unité de commande ; et
équilibrer le contrôle de l'écoulement fluidique dans ledit circuit fluidique primaire à l'aide de ladite unité de commande en tenant compte des variations dudit quatrième signal de commande de telle sorte que la température du fluide sortant est maintenue audit niveau constant.

4. Procédé selon la revendication 3, dans lequel l'étape consistant à détecter la pression différentielle comprend l'étape consistant à détecter la pression différentielle entre le fluide entrant au niveau d'une entrée dudit circuit fluidique primaire et du fluide sortant au niveau d'une sortie dudit circuit fluidique primaire.

5. Procédé selon l'une quelconque des revendications 3 ou 4, dans lequel ladite étape consistant à équilibrer le contrôle de l'écoulement fluidique dans ledit circuit fluidique primaire à l'aide de ladite unité de commande en fonction des variations dudit quatrième signal de commande comprend l'étape consistant à réguler ladite pression différentielle.

6. Procédé selon l'une quelconque des revendications 3, 4 ou 5, dans lequel ladite étape consistant à équilibrer le contrôle de l'écoulement fluidique dudit circuit fluidique primaire à l'aide de ladite unité de commande en fonction des variations dudit quatrième signal de commande comprend l'étape consistant à maintenir ladite pression différentielle à un niveau constant.

7. Dispositif permettant de contrôler un procédé d'échange thermique dans un dispositif de transfert de chaleur comprenant un circuit fluidique primaire et un circuit fluidique secondaire, **caractérisé par** :
une unité de commande ;
des premiers moyens de capteur connectés à ladite unité de commande et agencés de manière à détecter une première température du fluide entrant dans ledit circuit fluidique primaire et transférer un premier signal de commande représentant ladite première température détectée vers ladite unité de commande ;
des deuxièmes moyens de capteur connectés à ladite unité de commande et agencés de manière à détecter un écoulement fluidique entrant dudit circuit fluidique secondaire et transférer un deuxième signal de commande représentant ledit écoulement fluidique détecté vers ladite unité de commande ; et
des troisièmes moyens de capteur connectés à ladite unité de commande et agencés de manière à détecter une deuxième température du fluide entrant dans ledit circuit fluidique secondaire et transférer un troisième signal de commande représentant ladite deuxième température détectée vers ladite unité de commande ;
des moyens de commande connectés à ladite unité de commande et agencés afin d'agir sur ledit écoulement fluidique dans ledit circuit fluidique primaire ; et
en ce que ladite unité de commande est agencée pour, en utilisant lesdits moyens de commande, en réponse audit premier signal de commande, audit deuxième signal de commande et audit troisième signal de commande et, sans utiliser la température du fluide sortant provenant dudit circuit secondaire, contrôler l'écoulement fluidique dans ledit circuit fluidique primaire de telle sorte qu'un rapport d'écoulement proportionnellement correct continu entre l'écoulement fluidique sortant dudit circuit fluidique secondaire et l'écoulement fluidique entrant dudit circuit fluidique primaire est obtenu par rapport aux exigences en termes de température dudit fluide sortant.

8. Dispositif selon la revendication 7, dans lequel ladite unité de commande est agencée pour, en utilisant lesdits moyens de commande, contrôler l'écoulement fluidique dans ledit circuit fluidique primaire afin d'obtenir un rapport d'écoulement proportionnellement correct continu de telle sorte que la température dudit fluide sortant est maintenue à un niveau sensiblement constant défini par lesdites exigences en termes de température.

9. Dispositif selon l'une quelconque des revendications 7 ou 8, dans lequel ledit dispositif comprend en outre des quatrièmes moyens de capteur connectés à ladite unité de commande et agencés de manière à détecter la pression différentielle dudit circuit fluidique primaire et transférer un quatrième signal de commande représentant ladite pression différentielle vers ladite unité de commande ; et dans lequel ladite unité de commande est agencée pour, en utilisant lesdits moyens d'équilibrage, en réponse audit quatrième signal de commande, équilibrer le contrôle de l'écoulement fluidique dans ledit circuit fluidique primaire en fonction des variations dudit quatrième signal de commande de telle sorte que la température du fluide sortant dudit circuit fluidique secondaire est maintenue audit niveau constant.

10. Dispositif selon la revendication 9, dans lequel lesdits quatrièmes moyens de capteur sont agencés afin de détecter la pression différentielle entre le fluide entrant au niveau d'une entrée dudit circuit fluidique primaire et le fluide sortant au niveau d'une sortie dudit circuit fluidique primaire.

11. Dispositif selon la revendication 7 ou 8, dans lequel lesdits moyens d'équilibrage sont agencés afin de réguler ladite pression différentielle.

12. Dispositif selon l'une des revendications 9, 10 ou 11, dans lequel lesdits moyens d'équilibrage sont agencés afin de maintenir ladite pression différentielle à un niveau constant.
